# FASCICULE DE BREVET EUROPEEN

(11) **EP 4 608 645 B1**
(45) Date de publication et mention de la délivrance du brevet: **07.10.2026**
(21) Numéro de dépôt: 23798412.5
(22) Date de dépôt: 26.10.2023
(51) Int. Cl.: B32B 7/023, B32B 17/10, C03C 17/34

(54) **VITRAGE FEUILLETE ILLUMINABLE DE VEHICULE ET VEHICULE AVEC UN TEL VITRAGE**
BELEUCHTBARE VERBUNDSCHEIBE FÜR EIN FAHRZEUG UND FAHRZEUG MIT EINER SOLCHEN SCHEIBE
ILLUMINABLE LAMINATED GLAZING FOR A VEHICLE AND VEHICLE WITH SUCH A GLAZING

(30) Priorité: 26.10.2022 FR 2211148
(43) Date de publication de la demande: 03.09.2025
(73) Titulaire: Saint-Gobain Sekurit France, 60150 Thourotte (FR)
(72) Inventeur: BERARD, Mathieu, 93300 AUBERVILLIERS (FR); MIMOUN, Emmanuel, 93300 AUBERVILLIERS (FR); MONMEYRAN, Corentin, 93300 AUBERVILLIERS (FR); MAILLAUD, Laurent, 93300 AUBERVILLIERS (FR)
(74) Mandataire: Saint-Gobain Recherche
(86) Numéro de dépôt international: PCT/EP2023/079901
(87) Numéro de publication internationale: WO 2024/089161

(56) Documents cités:
- WO-A1-2016/156721
- FR-A1- 3 015 926

## Description

La présente invention est relative à un vitrage feuilleté illuminable, pour véhicule, notamment un vitrage de véhicule à diodes électroluminescentes.

Les diodes électroluminescentes ou DEL (LED en anglais) assurent depuis quelques années l'éclairage de dispositifs de signalisation (feux de signalisation...), de clignotants ou feux de position de véhicules automobiles. L'intérêt des diodes est leur longue durée de vie, leur efficacité lumineuse, leur robustesse, leur faible consommation énergétique et leur compacité, rendant les appareillages les employant davantage pérennes, et nécessitant un entretien réduit.

Plus récemment, les diodes électroluminescentes ont été utilisées pour les toits automobiles, notamment des toits feuilletés panoramiques à éclairage par diodes électroluminescentes comme décrit dans le document WO2010049638. La lumière émise par les diodes est introduite par la tranche dans le vitrage intérieur formant guide, la lumière étant extraite du vitrage par une couche diffusante sur le vitrage, dont la surface définit le motif lumineux, tel qu'un aplat émail contenant des particules diffusantes diélectriques.

Il est désormais recherché d'intégrer d'autres fonctionnalités dans le toit éclairant sans nuire aux performances de chacune de fonctions. FR 3 015 926 A1 décrit un vitrage lumineux comportantun premier substrat verrier en verre minéral; en contact optique avec le premier substrat verrier une couche polymérique choisie parmi un intercalaire de feuilletage associé à un élément teinté et/ou réfléchissant, et/ou une encapsulation polymérique opaque; une couche de silice poreuse; une source de lumière couplée optiquement au premier substrat verrier; des moyens d'extraction de lumière associés au verre de guidage; un revêtement de protection, minéral et transparent, directement sur la couche de silice poreuse et directement sous la couche polymérique.

La présente invention a cherché tout particulièrement à mettre au point un vitrage de véhicule à la fois lumineux et avec de bonnes propriétés thermiques. En effet, les vitrages pour l'automobile doivent avoir en outre une fonction bas émissive pour diminuer la quantité d'énergie dissipée vers l'extérieur. La fonction ou propriété « bas émissive » correspond à la capacité d'un vitrage à empêcher la chaleur de sortir en réfléchissant le rayonnement infrarouge.

A cet effet, la présente invention a pour objet un vitrage feuilleté illuminable (ou lumineux) de véhicule notamment routier (voiture, camion, transport en commun : bus, car etc) ou ferroviaire (train, métro, tramway), de préférence bombé, de préférence un toit voire un vitrage latéral (dont custode), une porte, un pare-brise, ou encore une lunette arrière, comprenant :
- un première feuille transparente (bombée), en verre minéral, éventuellement teintée (coloré en masse), notamment gris ou vert, première feuille de verre (transparente) comportant une première face principale extérieure dite face F1, une deuxième face principale intérieure dite face F2 (nue ou revêtue avec un revêtement fonctionnel - transparent- notamment d'au plus 200nm, notamment multicouches avec couches diélectriques et couche(s) métallique(s), de contrôle solaire ou chauffant), par exemple d'indice de réfraction nv d'au moins 1,5 et même d'au plus 1,6 ou 1,55, dans le visible (à une longueur d'onde de référence notamment choisi de 550nm à 600nm, par exemple 550nm, qui est de préférence dans la gamme spectrale de la source de lumière montée ou à monter)
- une deuxième feuille transparente (bombée), en verre de préférence minéral ou organique, notamment en verre clair ou de préférence extraclair, notamment d'épaisseur d'au plus 2,1mm, avec une troisième face principale dite face F3 et une quatrième face principale dite face F4 (orientée vers l'intérieur du véhicule), deuxième feuille d'indice de réfraction n0 notamment d'au moins 1,5 et éventuellement d'au plus 1,6 ou 1,55, dans le visible, notamment à une longueur d'onde de référence notamment choisie de 550nm à 600nm, par exemple 550nm, qui est de préférence dans la gamme spectrale de la source de lumière (montée ou à monter)

entre les faces F2 et F3 (et même en contact avec la face F3 de préférence nue et/ou avec la face F2 nue ou revêtue), une ou plusieurs couches intermédiaires (par exemple au plus 10, 5, 4 , 3, ou 2 couches intermédiaires), diélectriques, transparentes, d'indices de réfraction donnés dans le visible (à la longueur d'onde de référence), comportant un intercalaire de feuilletage polymère (avec une ou plusieurs couches intercalaires), en particulier la ou les couches intermédiaires sont les couches intercalaire, ou en majorité les couches intercalaires, de préférence avec une couche intercalaire (inférieure) en contact avec la face F3 nue et avec une couche intercalaire (supérieure) en contact avec la face F2 nue ou revêtue ou encore avec une seule couche intercalaire en contact avec la face F3 nue et en contact avec la face F2 nue ou revêtue,
la première feuille étant teintée et/ou parmi la ou les couches intermédiaires une première couche étant teintée, en particulier une première couche intercalaire teintée (notamment à base de PVB), notamment en contact avec la face F2 nue ou revêtue lorsque plusieurs couches intermédiaires, notamment intercalaire (notamment à base de PVB), sont teintées, la première couche teintée est la couche teintée la plus proche de la face F3,
n2 étant l'indice de réfraction dans le visible le plus bas parmi les indices de réfraction de la ou des couches intermédiaires (notamment couche intercalaire) entre la face F3 et jusqu'à la première couche teintée incluse ou jusqu'à la face F2 en l'absence de couche intermédiaire teintée, avec n2<n0, notamment à la longueur d'onde de référence, et de préférence n2<n0 pour toute la gamme spectrale, et typiquement n2<nv (en particulier si deuxième feuille en verre minéral).

Le vitrage comporte en outre de préférence une source de lumière (de préférence polychromatique, de gamme spectrale large d'au moins 100nm, notamment blanche) en couplage optique avec la deuxième feuille formant un guide de lumière. Notamment la source de lumière (de préférence diodes) est périphérique, de préférence décalée du clair de vitre. La source de lumière peut être démontable, ajoutée, vendue séparément du vitrage ou en kit. La source de lumière peut s'étendre linéairement (barrette(s) de diodes).

Le vitrage selon l'invention comporte en outre des moyens d'extraction de lumière (guidée), lumière guidée dans la deuxième feuille (moyens d'extraction de lumière liés à la deuxième feuille, en contact optique ou même direct avec la face F3 ou la face F4 ou dans la deuxième feuille).

Le vitrage selon l'invention comprend, un revêtement réfléchissant les infrarouges, transparent, lié à la face F4 (en contact optique avec la face F4), comportant une couche fonctionnelle électroconductrice (en contact optique avec la face F4 de préférence), notamment minérale et même d'oxy et/ou nitrure métallique (un ou plusieurs métaux), voire métal non argent, en particulier d'épaisseur ef d'au moins 20nm ou 50nm.

Le revêtement réfléchissant les infrarouges est de préférence multicouches en particulier avec sous couche(s) et surcouche(s) diélectrique(s) encadrant la couche fonctionnelle électroconductrice ou au moins une ou des surcouches (diélectriques). En particulier, la première ou seule sous-couche diélectrique, la plus proche de la deuxième feuille de verre, est d'indice de réfraction supérieur à n2 en particulier supérieur à 1,9 et même à 2 dans le visible notamment à la longueur d'onde de référence.

Le revêtement réfléchissant les infrarouges est présent dans une zone de propagation de lumière dans la deuxième feuille avant extraction par lesdits moyens d'extraction.

En outre, le vitrage selon l'invention comporte entre la face F4 et la couche fonctionnelle électroconductrice, une couche isolatrice optique, transparente, diélectrique, et d'indice de réfraction n1 dans le visible, avec n1<n2, notamment à la longueur d'onde de référence, et même pour toute la gamme spectrale de la source (notamment source polychromatique, par exemple RGB ou lumière blanche) et d'épaisseur E1 d'au moins 100nm ou même d'au moins 200nm et submillimétrique, et de préférence d'au plus 100µm ou 50µm ou 5µm ou 500nm.

La couche isolatrice optique est notamment en contact optique avec la face F4, sur une sous couche fonctionnelle (barrière, etc), notamment minérale, par exemple d'au plus 120nm ou 100nm et par exemple sous couche d'indice de réfraction supérieur à n2 (et à n1) dans le visible notamment à la longueur d'onde de référence.

Par simplicité, la couche isolatrice optique (notamment un revêtement) peut être en contact direct avec la face F4 (notamment dépôt directement sur la face F4).

La couche isolatrice optique est éventuellement en contact direct avec ladite couche fonctionnelle électroconductrice ou avec une (première, seule) sous-couche diélectrique (notamment sous couche mince, d'au plus 120nm, notamment un dépôt magnétron etc) d'indice de réfraction supérieur à n2, notamment d'au moins 1,9.

Pour la thermique, le revêtement réfléchissant les infrarouges de préférence s'étend au moins au niveau du clair de vitre, classiquement partie centrale du vitrage. Le revêtement réfléchissant les infrarouges s'étend même sur la totalité ou quasi totalité de la face F4 (par exemple au moins 80%, 90% de la face F4), par exemple est en retrait de la tranche de la deuxième feuille. Le revêtement réfléchissant les infrarouges est notamment adjacent (espacé ou non) à une couche de masquage intérieure périphérique (détaillée plus tard), sur la face F4, formant de préférence un cadre périphérique de masquage. La Demanderesse a identifié que l'absorption de la lumière visible par la couche fonctionnelle électroconductrice est non négligeable notamment dans le rouge pour une couche à base d'un oxyde conducteur transparent (TCO) telle qu'une couche à base d'oxyde d'indium et d'étain (ITO). Toutefois, l'absorption de la lumière visible à incidence normale demeure faible car la lumière traverse perpendiculairement la couche fonctionnelle électroconductrice. L'interaction entre le rayonnement et la couche fonctionnelle électroconductrice se fait uniquement sur l'épaisseur ef de la couche fonctionnelle.

Or la situation est différente pour la lumière du mode guidé, avec un revêtement réfléchissant les infrarouges directement sur la face F4 du guide de lumière, la lumière guidée étant susceptible d'interagir avec le revêtement réfléchissant les infrarouges. Les rayons du mode guidé sont « rasants », se propageant suivant un θ d'incidence par exemple supérieur à 78° environ dans la configuration avec couche intercalaire inférieure à base de butyral de polyvinyl (PVB) et une deuxième feuille de verre minéral. Ainsi, une partie importante de la lumière guidée rentrant en contact avec ce revêtement fonctionnel avec un angle rasant et est donc susceptible d'être absorbée lorsque le revêtement réfléchissant les infrarouges comprend une ou des couches absorbantes en l'espèce majoritairement la couche fonctionnelle électroconductrice.

Un rayon du mode guidé traverse donc la couche fonctionnelle électroconductrice sur une distance correspondant à : ef / cos (θ). Plus l'angle est rasant, plus cos (θ) est faible, plus les rayons du mode guidé interagissent avec la couche fonctionnelle électroconductrice sur une grande distance et donc plus les proportions de rayons absorbés sont aussi importantes.

C'est pourquoi on observe, en fonction de la lumière par la source injectée dans le guide, une altération, un changement chromatique, une diminution voire un effacement de la zone lumineuse issue de l'extraction au fur et à mesure que l'on s'éloigne du point d'injection de lumière due à l'absorption élevée en mode guidé aux angles rasants de la couche fonctionnelle électroconductrice.

Ce problème peut être particulièrement marqué aux grandes longueurs d'onde dans le visible car l'absorption d'une couche fonctionnelle électroconductrice à base d'oxyde transparent conducteur TCO et en particulier de l'ITO va croissant avec la longueur d'onde.

Typiquement le coefficient d'extinction k, partie imaginaire de l'indice de réfraction complexe, est entre 0,005 et 0,02 pour l'ITO dans le visible (en particulier à la longueur d'onde de référence par exemple 550nm et même sur la gamme spectrale de la source). Dans le cas d'une couche ITO, lorsque l'on utilise une source de lumière émettant de la lumière rouge (diode ou LED rouge), l'absorption en mode guidé du rouge se traduit par une couleur (ou luminosité, ou luminance) de la zone lumineuse qui s'atténue en s'éloignant de la source lumineuse (le long du motif diffusant). Lorsque l'on utilise une source de lumière émettant de la lumière blanche ou au moins RGB, l'absorption en mode guidé du rouge se traduit par une couleur qui s'altère, se modifie et une intensité lumineuse qui s'atténue en s'éloignant de la source lumineuse (le long du motif). L'invention s'applique à tout autre revêtement ayant au moins une couche fonctionnelle électroconductrice absorbante en particulier métallique non argent :
- à base de nitrure de titane, des exemples de revêtement à base de couches de nitrure de titane étant décrit dans la demande WO2020/128327,
- à base de niobium, tantale, molybdène et zirconium, des exemples de revêtements à étant décrit dans la demande US2014377580.

Pour préserver la zone lumineuse, les inventeurs ont donc choisi d'intercaler entre la face F4 et le revêtement réfléchissant les infrarouges, une couche isolatrice optique ayant une absorption plus faible et donc une meilleure préservation du mode guidé au sens de son intensité totale. La couche isolatrice optique (film ou revêtement) peut présenter de préférence une absorption lumineuse d'au plus 3% même 1% dans le visible (à la longueur d'onde de référence voire sur tout le visible).

La couche isolatrice optique est efficace, de par sa transparence, son caractère diélectrique, le choix de son indice de réfraction n1 avec une épaisseur E1 raisonnable. En fonction des matériaux disponibles et de l'intégration de la couche isolatrice optique, on abaisse plus ou moins E1, on se rapproche plus ou moins de n2.

Son indice n1 et son épaisseur E1 sont en particulier ajustés pour autoriser uniquement une onde évanescente aux angles d'incidence du mode guidé (au-delà de l'angle critique).

L'épaisseur de matière teintée permet de limiter l'échauffement dans l'habitacle. Une couche intermédiaire teintée (intercalaire ou d'un film teinté polymère ajouté (par exemple film PET teinté), par exemple première couche teintée, éventuellement unique) de préférence s'étend sur quasi tout le vitrage, notamment sur au moins 80% ou 90%. Pour la teinte d'une couche intermédiaire (notamment intercalaire ou dudit film polymère) on peut utiliser colorant moléculaire ou pigment inorganique.

Une couche intermédiaire teintée (intercalaire, couche supérieure et/ou inférieure, ledit film teinté, par exemple première couche teintée, éventuellement unique) peut avoir une transmission lumineuse d'au plus 50% ou 40% ou 30% ou 20% et même d'au moins 5%. On peut choisir une couleur de teinte différente, identique à celle de la première feuille de verre. Par exemple la première feuille de verre teinté est verte, bleue ou grise et la première couche teintée, de préférence couche intercalaire, (par exemple PVB) est bleue ou grise. On peut ajouter au moins une autre couche intermédiaire, de préférence intercalaire, claire (par exemple PVB clair) plus proche de la face F2 que la première couche teintée ou plus proche de la face F3.

L'invention tire parti de cette épaisseur de matière teintée. En effet, si les rayons les plus rasants sont guidés dans la deuxième feuille par réflexion totale interne avec l'interface avec la couche intermédiaire (couche inférieure intercalaire par exemple), d'autres rayons moins rasant se propageant dans le vitrage par réfraction, atteignent la matière teintée et sont rapidement absorbés après quelques rebonds (réfraction et réflexion). Ils donc sont rapidement absents à l'interface deuxième feuille de verre/ revêtement réfléchissant les infrarouges, par exemple au bout de moins de 10cm de la zone d'injection.

En particulier, la première feuille de verre et/ou toute couche intermédiaire teintée (intercalaire notamment PVB ou film teinté non adhésif comme le polytéréphtalate d'éthylène PET) sont suffisamment absorbants (compte tenu de leurs coefficients d'absorption et de leurs épaisseurs) pour que sur un rebond (réfraction de face F3 à face F1, puis réflexion sur face F1, réfraction jusqu'à la face F3, l'intensité lumineuse soit diminuée d'au moins 50%. On peut mesurer l'intensité lumineuse par spectroscopie en transmission. Typiquement le coefficient d'extinction k, partie imaginaire de l'indice de réfraction complexe pour un verre dénommé VG10 de la Demanderesse de 2mm (ou pour un PVB teinté de 0,76mm avec TL de 40% est de l'ordre 10⁻⁸ dans le visible (en particulier à la longueur d'onde de référence et même sur la gamme spectrale de la source).

L'épaisseur teintée crée ainsi un filtrage angulaire qui permet de ne pas devoir gérer les angles moins rasants. Dans cette zone proche de l'injection, le vitrage peut être masqué (garniture) et/ou le revêtement réfléchissant les infrarouges être absent par exemple au profit d'une couche de masquage périphérique telle que décrite plus tard).

L'intercalaire de feuilletage monocouche ou multicouches est notamment d'épaisseur d'au plus 1,2 cm ou subcentimétrique en particulier d'au moins 0,3mm, notamment tout ou partie thermoplastique (teinté ou non), avec par exemple au moins une partie inférieure de l'intercalaire (teinté ou non) dite couche inférieure intercalaire (par exemple un feuillet), d'épaisseur donnée de préférence d'au moins 100µm, en contact adhésif avec la face F3.

Le vitrage est ainsi teinté (donc absorbant dans le visible en particulier dans la gamme spectrale de la source de lumière) sur une épaisseur donnée par exemple d'au moins 100µm ou 300µm,
- la première feuille étant teintée (sur toute son épaisseur, colorée en masse)
- et/ou sur toute ou partie de l'intercalaire de feuilletage, de préférence épaisseur teintée submillimétrique, par exemple une couche supérieure intercalaire, entre la face F2 et la couche inférieure intercalaire, étant teintée (colorée en masse) et/ou la couche inférieure intercalaire étant teintée
- et/ou ou un film transparent teinté (coloré en masse), polymère (en particulier non adhésif au verre minéral et/ou organique), par exemple d'épaisseur d'au moins 30 ou 50 µm et d'au plus 200µm, étant inséré entre la face F2 et la couche inférieure intercalaire, par exemple au sein de l'intercalaire de feuilletage, entre couche inférieure intercalaire et une couche supérieure intercalaire.

Par exemple il s'agit d'un film thermoplastique (flexible, courbé suivant la courbure du vitrage), qui est : polyester, notamment polytéréphtalate d'éthylène (PET), poly(téréphtalate de butylène) PBT, poly(naphtalate d'éthylène) (PEN), , polyimide (PI), polyuréthane (PU) ou triacétate de cellulose (TAC), acrylique, polyoléfine notamment polypropylène (PP) polycarbonate (PC) ou PMMA, film (coextrudé) en PET-PMMA poly(chlorure de vinyle) PVC. Avec un film polymère en PC ou PMMA, on préfère (pour davantage de compatibilité chimique) comme couche intercalaire thermoplastique le polyuréthane thermoplastique (TPU). Il en est de même si on choisit une deuxième feuille de verre organique PC ou PMMA, on préfère couche intercalaire thermoplastique (notamment inférieure) le polyuréthane thermoplastique (TPU).

L'intercalaire de feuilletage (une couche supérieure intercalaire en particulier) peut avoir une face principale FA en contact adhésif avec la face F2 nue ou avec un revêtement fonctionnel sur la face F2. L'intercalaire (la couche inférieure intercalaire) peut avoir une face principale FB en contact adhésif avec la face F3 nue (FB face de la couche inférieure intercalaire).

La tranche ou bord extérieur de la couche isolatrice optique peut être décalée du clair de vitre par exemple défini par une couche de masquage interne périphérique (cadre) entre la face F2 et la face F3, notamment la couche isolatrice optique s'étendant sous cette couche de masquage interne (notamment émail, par exemple noir) sur au plus 10 cm ou au plus 3 cm.

On peut choisir pour tous les indices de réfraction selon l'invention une longueur d'onde de référence qui est 550nm et même selon la norme DIN 67507. De préférence les relations entre indices de réfraction n1<n2 et n0>n2 sont vraies pour toute la gamme spectrale visible de la source de lumière.

Avantageusement, la différence n2-n1 est supérieure à 0,02 ou même à 0,05 et/ou la différence n2-n1 de préférence est inférieure à 0,3 et même à 0,15 ou 0,1 (par exemple à 550nm).

De manière inattendu, compte tenu du filtrage angulaire, il n'est pas nécessaire d'abaisser n1 jusqu'à 1 ou au plus proche de 1, ce qui restreindrait drastiquement le choix du matériau. L'indice n1 peut être légèrement inférieur à n2 (notamment celui de d'une couche intercalaire de feuilletage) pour isoler toute la lumière qui se propage dans la deuxième feuille.

Si n1 est trop proche de n2 on doit davantage augmenter l'épaisseur E1, ce qui peut parfois être nuisible pour la tenue mécanique la couche isolatrice optique (apparition de microfissures etc).

On peut souhaiter avoir un n1 un peu plus éloigné de n2 et augmenter l'épaisseur E1 par exemple pour une couche isolatrice optique qui un revêtement organique par voie liquide. En outre pour une couche poreuse, notamment silice, le degré de porosité nécessaire est alors diminué.

De préférence, par exemple à 550nm, n1 est supérieur ou égal à 1,3 ou même à 1,35 ou 1,4, (n2 est notamment d'au moins 1,45 ou 1,48) et n0 est d'au moins 1,5. E1 est de préférence d'au moins 250nm. En particulier, à 550nm, n2=1,485 environ (et même la couche inférieure intercalaire est de préférence à base de PVB), et n0 est d'au plus 1,53. Pour caractériser l'absorption par le revêtement réfléchissant les infrarouges de la lumière en mode guidé, il n'est pas possible de déterminer expérimentalement des paramètres puisque le mode guidé existe seulement dans la deuxième feuille. En outre on fait l'hypothèse pessimiste du revêtement réfléchissant les infrarouges absorbant 100% de la lumière. Avec ce système, la Demanderesse a déterminé un modèle optique spécifique permettant d'évaluer par simulation la réflexion en mode guidé, en particulier le paramètre en mode guidé appelé Rgm qui est la quantité totale de lumière réfléchie à chaque réflexion sur l'interface à couches. Cette réflexion correspond à un angle d'incidence donnée (par exemple de 80° au delà de l'angle critique de 78° si deuxième feuille de verre minéral et couche inférieure PVB, selon la loi de Snell-Descartes donc avec n0=1,52± 0,01, n2=1,485±0,05 à 550nm). Une forte absorption dans le rouge en mode guidé se traduit par des valeurs limitées de Rgm. Typiquement Rgm pour un empilement à l'ITO est de 91% environ pour un vitrage feuilleté avec intercalaire à base de PVB et une première feuille de verre silicosodocalcique teinté, une deuxième feuille de verre silicosodocalcique extraclair.

Les inventeurs ont alors déterminé une couche d'isolation optique telle que même en présence d'une couche absorbant 100% de la lumière derrière celle-ci présente un paramètre Rgm plus élevé, de préférence d'au moins 95% ou même 97% ou encore 99% dénotant une très faible absorption et donc une meilleure préservation du mode guidé au sens de son intensité totale.

Ainsi, E1 et n1 sont choisis tels que la couche isolatrice optique présente un paramètre Rgm qui est la réflexion en mode guidé à l'interface deuxième feuille/ couche isolatrice optique d'au moins 95%, de préférence d'au moins 97% et même d'au moins 99%. Dans une réalisation, des simulations de ce système avec une couche absorbant à 100% ont été faites et validées avec n0=1,52, n2=1,485 à 550nm.

Notamment pour Rgm de 95%, l'épaisseur E1, en nm, est dans une première région délimitée d'un graphique de l'épaisseur E1 en fonction de n1, avec une première limite inférieure incluse E1a définie par une première courbe C1 de l'épaisseur en fonction de n1 d'équation suivante : $E 1 a \left(n1\right) = b 1 - {a}_{11} * \left(n1-{n}_{r 1}\right) - {a}_{31} * {\left(n1-{n}_{r 1}\right)}^{3} - {a}_{51} * {\left(n1-{n}_{r 1}\right)}^{5}$ avec nᵣ₁=1,499; b1=122nm; a₁₁=30,1nm; a₃₁=-9,44*10⁻³nm; a₅₁=5,69*10⁻⁶nm

Cette courbe présente une asymptote verticale proche de n2.

Et de préférence, notamment pour Rgm de 97%, l'épaisseur E1, en nm, est dans une deuxième région délimitée dudit graphique (plus restreinte que la première région), avec une deuxième limite inférieure incluse E1b, définie par une deuxième courbe C2 (au-dessus de C1) de l'épaisseur en fonction de n1 d'équation suivante : $E 1 b \left(n1\right) = b 2 - {a}_{12} * \left(n1-{n}_{r 2}\right) - {a}_{32} * {\left(n1-{n}_{r}\right)}^{3} - {a}_{52} * {\left(n1-{n}_{r 2}\right)}^{5}$ avec nᵣ₂=1,495, b2=154nm, a₁₂=30,5nm, a₃₂=-7,51*10⁻³nm; a₅₂=3,05*10⁻⁶nm

Et même encore plus préférentiellement, notamment pour Rgm de 99%, l'épaisseur E1, en nm, est dans une troisième région délimitée dudit graphique (plus restreinte que la première ou deuxième région), avec une troisième limite inférieure incluse E1c, définie par une troisième courbe C3 (au-dessus de C1 et C2) de l'épaisseur en fonction de n1 d'équation suivante : $E 1 c \left(n1\right) = b 3 - {a}_{13} * \left(n1-{n}_{r 3}\right) - {a}_{33} * {\left(n1-{n}_{r 3}\right)}^{3} - {a}_{53} * {\left(n1-{n}_{r 3}\right)}^{5}$

Avec nᵣ₃=1,492, b3=211nm; a₁₃=34,4nm; a₃₃=-6,43*10⁻³nm; a₅₃=1,99*10⁻⁶nm.

Et E1 est de préférence d'au plus 3µm ou même d'au plus 1,5µm.

Si on préfère E1 d'au plus 1µm, il faut n1 respectivement d'au moins 1,466, 1,4685, 1,453. Si on préfère E1 d'au plus 800nm, il faut n1 respectivement d'au moins 1,461, 1,453, 1,438. Si on préfère E1 d'au plus 600nm, il faut n1 respectivement d'au moins 1,442, 1,43, 1,40.

Si l'épaisseur E1 peut être d'au moins 1,2 µm (film autoportant, revêtement par voie liquide) on peut avoir n1 d'au moins 1,472, 1,470, 1,461.

Au-delà respectivement 1,3µm, 1,6µm, 2,2µm n1 est dans une gamme la plus large possible tant que n1<n2.

La couche isolatrice optique peut être un revêtement dit isolateur, de préférence monocouche, sur la face F4 (de préférence en contact direct), et en contact avec le revêtement réfléchissant les infrarouges, en particulier avec la couche fonctionnelle électroconductrice ou de préférence avec une (première et même unique) sous-couche diélectrique transparente du revêtement réfléchissant les infrarouges et notamment d'indice de réfraction supérieur à n2.

E1 minimum dépend du type de matériau et du procédé de dépôt.

Par exemple on prévoit l'épaisseur E1 d'au moins 300nm, 400nm, 500nm, 800nm et de préférence d'au plus 5µm ou 3µm ou même d'au plus 1,5µm.

Le revêtement isolateur (et le revêtement réfléchissant les infrarouges) peut être déposé sur la deuxième feuille de verre plane avant l'opération de bombage trempe (et donc doit être trempable). Le revêtement réfléchissant les infrarouges (minéral) est alors de préférence trempable également. Sinon le revêtement isolateur optique (et le revêtement réfléchissant les infrarouges) peut être déposé (par voie liquide de préférence) sur la deuxième feuille de verre bombée en particulier si revêtement isolateur organique. Typiquement l'opération de bombage trempe est à une température d'au moins 600°C. Le revêtement isolateur peut être déposé après le feuilletage en particulier si revêtement isolateur adhésif avec un élément (film, transparent) porteur du revêtement réfléchissant les infrarouges, par exemple un verre (trempé).

Le revêtement isolateur peut être minéral, et sur la deuxième feuille de verre de préférence minéral de préférence revêtement à base de silice (dense ou de préférence poreuse) en particulier sol-gel avec E1 au plus 1,5µm, 1,1µm ou 1µm. De préférence la deuxième feuille de verre est alors minérale dans le cas d'un dépôt sol gel impliquant une élimination d'agent porogène par traitement thermique (par exemple lors du bombage-trempe).

Le revêtement isolateur comporte (notamment est constitué de) de préférence :
- couche sol-gel à base de silice poreuse et E1 est d'au plus 1µm mieux d'au plus 800nm et même 700 nm, pour éviter le risque de fissures, n1 peut aller aisément jusqu'à 1,3
- ou couche à base d'oxyde (de silice etc) déposée par voie physique en phase vapeur PVD tel que la pulvérisation magnétron et E1 est d'au plus 1µm mieux d'au plus 700 nm et même 400 nm car le dépôt est très lent,
- ou une couche à base de silice poreuse obtenue à partir d'une couche SiOxCyHz déposée par une combinaison entre voie chimique assisté par plasma (PECVD) et pulvérisation magnétron, avec E1 d'au plus 500nm de préférence, et après (bombage)-trempe devenant de la silice (plus) poreuse, par exemple procédé de dépôt d'une telle couche décrit dans la demande de brevet WO2012172266.

En pulvérisation magnétron la couche de silice peut contenir un ou d'autres éléments comme de l'aluminium et l'indice de réfraction peut être de 1,48.

La proportion en volume de pores peut être limitée et contrôlée en particulier par voie sol gel.

Le revêtement isolateur (protecteur) peut comporter (être constitué de) une couche à base de silice poreuse, notamment sol-gel, en particulier n1 est d'au plus 1,44, éventuellement avec une sous-couche de silice dense notamment sol-gel d'indice de réfraction supérieur à n1 (par exemple d'au moins 0,02 ou 0.05), de 1,45. Cette sous-couche a de préférence une épaisseur d'au moins 5 nm, notamment d'au plus 120 nm, par exemple entre 50nm ou 80nm et 120nm.

Le revêtement isolateur (protecteur) peut comporter (être constitué de) une couche à base de silice poreuse notamment sol-gel de porosité inférieure à 20% ou à 10% en volume, en particulier n1 est d'au moins 1,4 ou 1,42 ou 1,44.

La structuration de la couche sol gel en pores est liée à la technique de synthèse de type sol-gel, qui permet de condenser la matière essentiellement minérale (c'est-à-dire minérale ou hybride organique minérale) avec un agent porogène convenablement choisi en particulier de taille(s) et/ou de forme(s) bien définie(s) (allongé, sphérique, ovale etc). Les pores peuvent être de préférence vides ou éventuellement être remplis. On peut ainsi choisir de la silice élaborée à partir de tétraétoxysilane (TEOS).

On peut ajuster à façon l'indice de réfraction en fonction du volume de pores. On peut utiliser en première approximation la relation suivante pour le calcul de l'indice n1: n1=f.nₐ+(1-f).nₚₒᵣₑₛ où f est la fraction volumique du matériau constitutif de la couche (ici la silice) et nₐ son indice de réfraction (ici de la silice) et nₚₒᵣₑₛ est l'indice des pores généralement égal à 1 s'ils sont vides.

On peut aussi ajuster à façon l'épaisseur de la couche isolatrice optique en choisissant le taux de solvant adéquat.

Les pores peuvent être fermés, fait par élimination d'un agent porogène particulaire.

La plus petite dimension caractéristique des pores notamment fermés (et de préférence la plus grande dimension également) peut être supérieure ou égale à 30 nm et de préférence inférieure à 200 ou 100 nm voire à 80 nm, et inférieure à E1. La porosité peut être en outre monodisperse en taille.

Le revêtement réfléchissant les infrarouges étant préférablement déposé par pulvérisation magnétron on préfère un revêtement isolateur sous-jacent compatible avec ce procédé de dépôt et même avec la première sous couche. On peut en particulier préférer un revêtement isolateur apte au recuit, parfois nécessaire pour augmenter la conductivité électrique du revêtement réfléchissant les infrarouges.

La couche isolatrice optique, notamment revêtement isolateur, de préférence monocouche, peut comporter (être constituée de) une couche organique ou hybride inorganique organique, notamment une couche acrylate, polyméthacrylate (vernis etc). La couche isolatrice optique est éventuellement en contact avec le revêtement réfléchissant les infrarouges ou le revêtement réfléchissant les infrarouges est sur un film porteur du revêtement réfléchissant les infrarouges sur une face principale externe Fe de préférence verre, notamment d'épaisseur d'au plus 600µm.

E1 est par exemple au plus 50µm ou 10µm ou 5µm micronique ou même d'au plus 800nm ou 700nm. La limite haute et/ou basse peut dépendre du procédé de dépôt. On préfère que la couche isolatrice optique (le revêtement isolateur) soit monocouche et sur la face F4, par simplicité.

Comme couche sol-gel hybride organique inorganique, on peut choisir une couche à base de méthyltriéthoxysilane (MTEOS), un organosilane à groupement organique non réactif. Le MTEOS est un organosilane qui possède trois groupements hydrolysables et dont la partie organique est un méthyle, non réactif.

Même si l'on préfère (pour sa simplicité, sa compacité) une couche isolatrice optique sous forme d'un revêtement sur la face F4 et directement recouvert du revêtement réfléchissant les infrarouges on peut envisager d'autres modes de réalisation de l'invention.

On peut alternativement choisir de coller un film isolateur optique fluoropolymère (thermoplastique) sur la face F4 et le lier à un film transparent (polymère ou de préférence verre clair ou extraclair notamment ultramince ou 'UTG' d'au plus 600µm ou 500µm ou 300µm) porteur du revêtement réfléchissant les infrarouges. Le film en fluoropolymère peut être à base voire en l'une des matières suivantes :
- le perfluoroalkoxy PFA, notamment de n1 d'environ 1,3
- le poly(vinylidène fluoride) PVDF, notamment de n1 d'environ 1,4
- l'éthylène Chlorotrifluoroéthylène l'ECTFE
- l'éthylène tétrafluoroéthylène l'ETFE , plus précisément poly(éthylène-co-tétrafluoroéthyléne, notamment de n1 d'environ 1,4
- le copolymère éthylène propylène perfluoré FEP ou (Fluorinated Ethylene Propylene en anglais) notamment de n1 d'environ 1,3
- le polytétrafluoroéthylène PTFE notamment de n1 d'environ 1,3, le fluorure de polyvinyle (Polyvinyl Fluoride ou PVF).

Dans une configuration, la couche isolatrice optique, de préférence monocouche, peut comporter (être constitué de) une couche adhésive, en matière polymère réticulé (film ou revêtement) sur la face F4 (en contact direct de préférence) et en contact avec une face principale interne Fi d'un film (polymère ou de préférence verre clair ou extraclair notamment ultramince ou 'UTG' d'au plus 600µm ou 500µm ou 300µm) transparent, film transparent porteur du revêtement réfléchissant les infrarouges sur une face principale externe Fe opposé à la face principale interne Fi.

On préfère un film transparent minéral (verre minéral) dans le cas où le revêtement réfléchissant les infrarouges a besoin d'un recuit pour améliorer sa conductivité. Classiquement si le support est d'indice n'2 proche de n1 et supérieur à n2 il ne joue pas de rôle pour réduire l'absorption dans le revêtement réfléchissant les infrarouges.

La couche isolatrice optique peut être une colle optique (OCA pour optically clear adhesive en anglais, LOCA si liquide).

Pour la fabrication de la couche isolatrice optique, on peut utiliser des adhésifs réticulables qui durcissent lorsque leurs composants réagissent (photoréticulable notamment sous ultraviolet, thermoréticulable etc) ou lorsqu'un solvant s'évapore. Dans tous les cas il y a réaction chimique afin de créer des liaisons chimiques pour la réticulation, polymère réticulé défini alors par la formation d'un réseau 3D de chaines polymériques liées par des liaisons chimiques.

Ainsi la manière dont l'adhésif réticulable durcit dépend de sa nature, certains (photo)réticulant notamment par apport d'énergie du type ultraviolets (UVA) ou visible (400-405nm) d'autres réticulant à température ambiante avec l'ajout d'un durcisseur par réaction chimique. D'autres adhésifs réticulables sont réticulés par réaction chimique initiée et favorisé grâce à l'apport d'énergie thermique.

Un dépôt par voie liquide de l'adhésif réticulable peut se faire par pulvérisation (spray coating), par application au rideau (curtain coating), par aspersion (flow coating), par application au rouleau (roller coating), par écoulement laminaire à travers une fente (slot die), par trempage ou par coulée (dip coating), à la lame (blade coating), par sérigraphie (screen printing) ou par jet d'encre (inkjet) ou par coulée (drop casting) ou par remplissage d'une cavité avec une seringue notamment.

De préférence, la couche isolateur optique peut être de préférence photo-réticulée par ultraviolet, par exemple comporte une matrice polymère photo-réticulée par ultraviolet. Dans une configuration, la couche isolatrice optique, de préférence monocouche, comporte en particulier:
- un film adhésif de préférence d'épaisseur d'au moins 30µm (davantage manipulable, moins de risque de plis) et mieux d'au plus 100µm ou 50µm de préférence film sensible à la pression, de préférence choisi parmi les polymères à base d'acrylate, d'uréthane acrylate ou en fluoro uréthane acrylate ou de silicone
- ou un revêtement adhésif de préférence d'épaisseur d'au moins 800nm ou 1µm, ou même d'au moins 10µm.

Dans une configuration, la couche isolatrice optique comporte (est) un film adhésif à base de polymère réticulé, notamment d'au moins 30µm, de préférence film sensible à la pression, de préférence choisi parmi les polymères à base d'acrylate, d'uréthane acrylate ou en fluoro uréthane acrylate ou de silicone.

La matière polymère réticulé de la couche isolatrice optique adhésive est par exemple choisie parmi les polymères à base de polyacrylate, notamment d'uréthane acrylate ou de fluoro uréthane acrylate ou de fluoro-silicone acrylate, de polysiloxanes, de silicone, notamment de polydiméthylsiloxane, de polymère époxy ou de polyépoxydes, de polyuréthane, d'acétate de polyvinyle, de polyester. En particulier, la matière polymère réticulé de la couche isolatrice optique adhésive est de préférence est choisie parmi un polymère à base d'acrylate, notamment d'uréthane acrylate ou de silicone acrylate ou à base de silicone, et le polymère ayant en outre une fonction fluorée.

On peut citer comme adhésif liquide (UV) réticulable pour un dépot par voie liquide:
- adhésif à base d'uréthane acrylate par exemple de la société Norland, notamment le produit dénommé LOCA Norland NOA 1315 (n1 =1,315) qui est un uréthane acrylate aliphatique,
- adhésif à base de fluoro uréthane acrylate par exemple de la société Shin-A, notamment le produit dénommé SFA 335 (n1 =1,335-1,339) ou SFA 387 (n1 =1,385-1,389),
- adhésif à base d'acrylate par exemple notamment le produit dénommé UZ181A (n1 =1,47) de la société AKChemTeck, ou encore le produit dénommé UVEKOL S15 (n1 =1,44) de la société Allnex.

On peut citer les adhésifs liquides à base de fluoro uréthane acrylate par exemple de la société Shin-A, notamment le produit dénommé LOCA Shin-A 335 (n1 =1,335-1,339) ou 387 (n1 =1,385-1,389).

En particulier le film sensible à la pression (PSA en anglais pour pressure sensitive adhesive) colle par contact après application d'une pression mécanique.

Comme film bas indice PSA à base d'acrylate, on peut citer le produit dénommé CS986 (n1 =1,47) de la société Nitto.

Comme film bas indice PSA à base de silicone, on peut citer le produit dénommé Opt Alpha Gel de la société Taica (n1= 1,41).

Concernant le silicone on préfère le polydiméthylsiloxane, PDMS ou diméthicone, qui est un polymère organominéral de la famille des siloxanes.

Un adhésif sensible à la pression, abrégé PSA et communément appelé auto-adhésif, est un adhésif qui forme une liaison lorsqu'une pression lui est appliquée de manière à solidariser l'adhésif avec la surface à coller. Aucun solvant, ni d'eau, ou de chaleur n'est nécessaire pour activer l'adhésif.

Comme son nom l'indique "sensible à la pression", le degré de liaison entre une surface donnée et le liant autoadhésif est influencée par la quantité de pression utilisée pour appliquer l'adhésif sur la surface cible et la nature et la densité des liaisons physiques formées entre l'adhésif et le substrat (feuille de verre minéral ou organique).

Les PSA sont généralement conçus pour former une liaison et maintenir celle-ci à la température ambiante.

Les PSA peuvent être en caoutchouc, en polyuréthane, en polymère d'ester acrylique, en polysiloxane.

Les PSA sont généralement à base d'élastomère couplé avec un agent adhésif supplémentaire approprié ou agent « tackifiant » (par exemple, une résine ester). Les élastomères peuvent être de préférence à base :
- d'acrylates, qui peuvent être suffisamment collant pour ne pas exiger un agent tackifiant supplémentaire.
- de silicone, requérant des agents tackifiants spéciaux telles que des résines de silicate de type « MQ », composées de triméthyle silane monofonctionnel ("M") qui a réagi avec tétrachlorure de silicium quadrifonctionnel ("Q"), les PSA à base de silicone sont par exemple des gommes et résines de polydiméthylsiloxane dispersées dans du xylène ou un mélange de xylène et toluène
ou éventuellement :
- des copolymères blocs à base de styrène tel que des copolymères blocs Styrène butadiène-styrène (SBS), styrène-éthylène / butylène-styrène (SEBS), styrène-éthylène / propylène (SEP), styrène isoprène -styrène (SIS),
- les éthers vinyliques.
- de nitriles.

Des adhésifs PSA sont commercialisés sous forme de rouleaux d'adhésifs double face avec un liner sur chaque face pour protéger le film PSA.

On peut citer comme PSA à base de silicone les adhésifs de Dow Corning^{®} tel que le 2013 Adhesive, 7657 Adhesive, Q2-7735 Adhesive, Q2-7406 Adhesive, Q2-7566 Adhesive, 7355 Adhesive, 7358 Adhesive, 280A Adhesive, 282 Adhesive, 7651 Adhesive, 7652 Adhesive, 7356 Adhesive ou les adhésifs de Taica tel que l'OPT alpha GEL^{®} tel que le K120E, K90E ou les adhésifs de MRK tel que le MR3050, MR3080. On peut citer comme PSA à base d'acrylate les adhésifs de Nitto tel que le CS98210U, CS98210UK ou les adhésifs de Tesa^{®} tel que le OCA 69206, OCA 69208, OCA 69405. Le revêtement réfléchissant les infrarouges peut comprendre une seule ou plusieurs couches fonctionnelles électroconductrices. De préférence, il est dénué de couche d'argent et /ou d'or.

La couche fonctionnelle électroconductrice peut être à base d'oxy et/ou nitrure métallique. La couche fonctionnelle électroconductrice peut être tout particulièrement à base d'oxyde transparent conducteur ou couche TCO (pour oxyde transparent électroconducteur) en particulier choisi parmi : l'oxyde d'étain dopé au fluor, l'oxyde d'étain dopé à l'antimoine et/ou l'oxyde d'indium et d'étain, l'oxyde de zinc dopé ou non à l'aluminium, au gallium ou à l'antimoine.

La couche fonctionnelle électroconductrice TCO est de préférence une couche d'oxyde d'étain dopé au fluor (SnO₂ :F) ou une couche d'oxyde mixte d'étain et d'indium (ITO). En particulier le revêtement comprend une seule couche TCO et même de l'ITO. D'autres couches fonctionnelles électroconductrices TCO sont possibles, parmi lesquelles les couches minces à base d'oxydes mixtes d'indium et de zinc (appelées « IZO »), à base d'oxyde de zinc dopé au gallium ou à l'aluminium, à base d'oxyde de titane dopé au niobium, à base de stannate de cadmium ou de zinc, à base d'oxyde d'étain dopé à l'antimoine. Dans le cas de l'oxyde de zinc dopé à l'aluminium, le taux de dopage (c'est-à-dire le poids d'oxyde d'aluminium rapporté au poids total) est de préférence inférieur à 3%. Dans le cas du gallium, le taux de dopage peut être plus élevé, typiquement compris dans un domaine allant de 5 à 6%.

Dans le cas de l'ITO, le pourcentage atomique de Sn est de préférence compris dans un domaine allant de 5 à 70%, notamment de 10 à 60%. Pour les couches à base d'oxyde d'étain dopé au fluor, le pourcentage atomique de fluor est de préférence d'au plus 5%, généralement de 1 à 2%.

L'épaisseur de la couche TCO est ajustée, en fonction de la nature de la couche, de manière à obtenir l'émissivité voulue, laquelle dépend des performances thermiques recherchées Par « émissivité », on entend l'émissivité normale à 283 K au sens de la norme EN12898. L'émissivité est par exemple inférieure ou égale à 0,3, notamment à 0,25 ou même à 0,2. Pour une couche en ITO, l'épaisseur est généralement d'au moins 40 nm, voire d'au moins 50 nm et même d'au moins 70 nm, et souvent d'au plus 150 nm ou d'au plus 200 nm. Pour une couche en oxyde d'étain dopé au fluor, l'épaisseur est généralement d'au moins 120 nm, voire d'au moins 200 nm, et souvent d'au plus 500 nm.

Le revêtement réfléchissant les infrarouges est de préférence multicouches, notamment déposé par pulvérisation magnétron, et comporte de préférence entre la couche isolatrice optique et la couche fonctionnelle électroconductrice, une première sous couche diélectrique voire une deuxième sous couche diélectrique, en particulier:
- à base d'oxyde métallique ou de silicium : oxyde de zinc et d'étain, d'oxyde de zinc ou les couches à base d'oxyde de titane, de silice
- à base de nitrure ou d'oxynitrure métallique ou de silicium, notamment à base de nitrure d'un ou plusieurs éléments choisis parmi le silicium, l'aluminium ou le zirconium, de préférence à base de nitrure de silicium,
- ou de carbure ou d'oxycarbure de silicium.

Parmi les couches diélectriques, on distingue, en fonction de leur indice de réfraction à 550 nm, les couches à bas indice de réfraction, les couches d'indice de réfraction intermédiaire et les couches à haut indice de réfraction. Les couches à bas à bas indice de réfraction présentent un indice de réfraction inférieure à 1,70. Les couches d'indice de réfraction intermédiaire présentent un indice de réfraction compris entre 1,70 et 2,2. Les couches à haut indice de réfraction présentent un indice de réfraction supérieur à 2,2. Les couches d'indice de réfraction intermédiaire peuvent être choisies parmi :
- les couches à base d'oxyde de zinc (n550 = 2,0),
- les couches à base d'oxyde d'étain (n550 = 2,0),
- les couches à base d'oxyde de zinc et d'étain (n550 = 2,0),
- les couches à base de nitrure de silicium et/ou d'aluminium (n550 = 2,1),
- les couches à base d'oxynitrure de silicium et/ou d'aluminium.

Les couches à haut indice de réfraction peuvent présenter un indice de réfraction :
- supérieur à 2,30, supérieur à 2,35 ou supérieur à 2,40.
- inférieur à 2,60, inférieur à 2,50, inférieur à 2,40.

Les couches à haut indice de réfraction peuvent être choisies parmi :
- les couches à base d'oxyde de titane (n550=2,4),
- les couches à base d'oxyde mixte de titane et d'un autre composant choisi dans le groupe constitué par Zn, Zr et Sn,
- les couches à base une couche de nitrure de zirconium,
- les couches à base de nitrure de silicium et de zirconium (n550 nm = 2,20 - 2,40),
- les couches à base une couche d'oxyde de zirconium,
- les couches à base d'oxyde de manganèse MnO (n550 = 2,16),
- les couches à base une couche d'oxyde de tungstène (n550 = 2,15),
- les couches à base une couche d'oxyde de niobium (n550 = 2,30),
- les couches à base une couche d'oxyde de bismuth (n 550 = 2,60).

En particulier, la première sous-couche diélectrique est d'indice de réfraction supérieur à n1 et même à n2 notamment à haut indice de réfraction, à base de nitrure de silicium par exemple. Et la deuxième sous-couche diélectrique est bas indice de réfraction, à base d'oxyde de silicium (de silice) par exemple.

Le revêtement réfléchissant les infrarouges peut comporter une première sous couche diélectrique d'indice de réfraction supérieure à n2, de préférence d'indice de réfraction d'au moins 1,7, notamment nitrure de silicium, la couche isolatrice optique (de préférence revêtement isolateur minéral) est notamment en contact avec la première sous couche diélectrique.

Les couches diélectriques sont ainsi classiquement choisies parmi les couches à base d'oxyde, à base de nitrure ou à base d'oxynitrure. Les couches diélectriques à base d'oxyde d'un ou plusieurs éléments comprennent essentiellement de l'oxygène et très peu d'azote. Les couches diélectriques à base d'oxyde comprennent notamment au moins 90 % en pourcentage atomique d'oxygène par rapport à l'oxygène et l'azote dans ladite couche. Les couches diélectriques à base de nitrure comprennent essentiellement de l'azote et très peu d'oxygène. Les couches diélectriques à base nitrure comprennent au moins 90 % en pourcentage atomique d'azote par rapport à l'oxygène et l'azote dans ladite. Les couches diélectriques à base d'oxynitrure comprennent un mélange d'oxygène et d'azote. Les couches diélectriques à base d'oxynitrure comprennent 10 à 90 % (bornes exclues) en pourcentage atomique d'azote par rapport à l'oxygène et l'azote dans ladite couche.

Les couches diélectriques comprenant du silicium peuvent comprendre ou être constituées d'éléments autres que le silicium, l'oxygène et l'azote. Ces éléments peuvent être choisis parmi l'aluminium, le bore, le titane, et le zirconium. Les couches comprenant du silicium peuvent comprendre au moins 2 %, au moins 5 % ou au moins 8 % en masse d'aluminium par rapport à la masse de tous les éléments constituant la couche comprenant du silicium autres que de l'oxygène et l'azote.

Les couches diélectriques comprenant de l'aluminium peuvent être choisies parmi les couches à base d'oxyde, à base de nitrure ou à base d'oxynitrure telles que les couches à base d'oxyde de d'aluminium tels que Al₂O₃, les couches à base de nitrure d'aluminium tels que AIN et les couches à base d'oxynitrure d'aluminium tels AlOxNy.

Comme exemple, on peut choisir pour le revêtement réfléchissant les infrarouges: sous-couche haut indice (<40 nm) / sous-couche bas indice (<30 nm) / une couche ITO/ surcouche haut indice (5 - 15 nm))/ surcouche bas indice (<90 nm) barrière.

On peut citer comme empilement à l'ITO ceux décrits dans le brevet US2015/0146286, sur la face F4, notamment dans les exemples 1 à 3.

On connait également un revêtement réfléchissant les infrarouges dans la demande de brevet WO2018/206236.

Le vitrage selon l'invention, en particulier le toit, peut comporter entre la face F2 et la face F3 un dispositif électrocommandable avec un empilement (support diélectrique)/électrode/couche active/électrode/(support diélectrique) par exemple entre deux feuillets (ou couches intercalaire) de l'intercalaire de feuilletage (PVB etc). On peut choisir comme dispositif électrocommandable :
- dispositif à flou variable: un dispositif à cristaux liquides (PDLC, PNLC, CLC, cellule à cristaux liquides), avec un empilement (support diélectrique)/électrode(/couche d'alignement)/couche active(/(couche d'alignement)/électrode/(support diélectrique) par exemple entre deux feuillets (ou couches intercalaire) de l'intercalaire de feuilletage (PVB etc),
- dispositif à teinte variable: un dispositif électrochrome, un dispositif à valve optique (SPD pour suspended particle device en anglais) par exemple.

L'épaisseur de la couche active peut être de 1 à 20µm et même 5 à 15µm.

L'un ou les supports transparents sont flexibles, polymère par exemple d'au plus 200µm (PET etc), ou verre exemple d'au plus 400µm.

Chaque support est pourvu d'une électrode (couche transparente par exemple oxyde métallique conducteur ou empilement à l'argent) et éventuellement d'une couche d'alignement notamment pour un ancrage planaire ou homéotrope.

Comme dispositif à cristaux liquides on peut citer un système à cristaux liquides polymériques dispersés « PDLC » (pour Polymer-Dispersed Liquid Crystal, en anglais où les cristaux liquides sont dispersés dans une matrice polymérique), ou un système à cristaux liquides cholestériques « CLC » (pour Cholesteric Liquid Crystal en anglais), ou encore un système à cristaux liquides en réseau polymérique « PNLC » (pour Polymer Network Liquid Crystal en anglais).

Une cellule à cristaux liquides comporte une couche active (essentiellement et même uniquement) de cristaux liquides, les cristaux liquides présentant une orientation prédéfinie ou direction d'équilibre. La cellule à cristaux liquides est encapsulée entre deux supports (films polymériques ou verre) qui sont maintenus à distance constante grâce à des espaceurs (transparents, de préférence ponctuels, 3D) tels que des billes (ou cube ou cylindrique base circulaire etc) en verre ou polymère.

Comme exemple de cellule à cristaux liquides on peut citer celles décrites dans les demandes de brevet JP2018141891 ou EP3990981.

La cellule à cristaux liquides peut avoir l'une au moins des caractéristiques techniques suivantes cumulatives ou alternatives :
- la couche active contient au plus 5% ou 1% ou 0% de polymère et précurseur de polymère dans la solution (hors espaceurs)
- la cellule à cristaux liquides est dite « hôte-invités » (guest host en anglais ou GH), et la couche active comporte au moins un colorant dichroïque et (les faces externes des premiers supports intérieur et extérieur sont les faces externes de la cellule « hôte-invités »)
- ou la cellule à cristaux liquides est dite TN (pour nématique torsadé, twisted nematic en anglais) et comporte un polariseur supérieur (teinté) sur une face externe supérieure du support supérieur avec électrode et un polariseur inférieur (teinté) sur une face externe inférieure du support inférieur avec électrode (les faces externes des polariseurs sont les faces externes de la cellule),

On peut aussi ajouter un dispositif photovoltaïque (transparent ou opaque) entre la face F2 et la face F3, dispositif photovoltaïque entre deux couches intercalaires de l'intercalaire de feuilletage (PVB etc) en particulier ou au-dessus et même en contact de la première couche teintée (intercalaire de préférence).

Ce dispositif électrocommandable ou photovoltaïque est par exemple, tout ou partie en vis-à-vis ou décalé des moyens d'extraction de lumière guidée, et de préférence entre la face F2 et la première couche teintée (couche supérieure intercalaire teintée par exemple notamment PVB). Les supports du dispositif électrocommandable sont par exemple des films non adhésifs, en polymère thermoplastique comme du PET.

En effet, entre la face F3 et la première couche teintée, on préfère éviter toute couche (électrode etc) métallique (pur ou nitruré par exemple) ou encore d'oxyde conducteur transparent ou même toute couche avec un coefficient d'extinction k, partie imaginaire de l'indice de réfraction complexe, d'au moins 10⁻⁵ dans le visible (en particulier à la longueur d'onde de référence par exemple 550nm et même sur la gamme spectrale de la source).

Le vitrage feuilleté selon l'invention peut donc comprendre au moins un dispositif électrocommandable et/ou photovoltaïque, de préférence entre (et même en contact avec) la première couche teintée qui est de préférence une couche intercalaire (PVB) et une couche intercalaire (PVB clair ou teinté) plus proche de la face F2 que la première couche teintée (intercalaire de préférence)..

Le vitrage feuilleté selon l'invention peut comprendre alternativement ou cumulativement un film fonctionnel non adhésif (film polymère -PET par exemple- éventuellement avec un revêtement fonctionnel de préférence non métallique) entre (et même en contact avec) la première couche teintée qui est par exemple une couche intercalaire (PVB), et la face F3 et même entre (et même en contact avec) la première couche teintée (intercalaire, de préférence à base de PVB) et une couche intercalaire (de préférence à base de PVB) sur la face F3.

Le vitrage feuilleté selon l'invention peut comporter également une couche réfléchissant ou absorbant les infrarouges, en face F2 ou sur un film polymère transparent (PET etc) entre deux couches intercalaires, en particulier un empilement de couches minces dit bas émissif comprenant au moins une couche métallique telle que l'argent (et même 2 ou 3 ou 4), la ou chaque couche d'argent étant disposée entre des couches diélectriques. Dans cette configuration, la première couche teintée (intercalaire de préférence) est plus proche de la face F3 que cet empilement bas émissif et la première feuille de verre est claire et même toute couche (intercalaire etc) entre la face F3 et l'empilement bas émissif.

Plus largement, entre la première couche teintée et la face F3, on préfère éviter toute couche métallique (pur ou nitruré par exemple) ou encore d'oxyde conducteur transparent, ou même toute couche ayant un coefficient d'extinction k partie imaginaire de l'indice de réfraction complexe, d'au moins 10⁻⁵ dans le visible (en particulier à la longueur d'onde de référence par exemple 550nm et même sur la gamme spectrale de la source).

L'intercalaire de feuilletage peut être monocouche ou multicouches (notamment multicouches, deux, trois ou quatre couches adhésives, notamment films adhésifs ou feuillets). Les interfaces entre couches (feuillet) ne sont pas forcément discernables. L'intercalaire de feuilletage peut incorporer un ou des éléments (non adhésifs au verre) tels que des films polymères fonctionnels ou des éléments électro optiques, des capteurs, de diverses étendues (tout ou partie du vitrage). Par exemple deux feuillets de PVB dans un empilement PVB/film polymère non adhésif avec le verre/PVB etc.

On préfère également choisir un intercalaire de feuilletage le moins flou possible c'est-à-dire d'au plus 1,5% et même d'au plus 1%.

De préférence, l'intercalaire de feuilletage comprend une ou plusieurs feuilles polymère (couche inférieure intercalaire, couche supérieure intercalaire etc). Les polymères sont choisis parmi le butyral de polyvinyl (PVB), les polyuréthanes (PU) en particulier TPU, l'éthylène acétate de vinyle (EVA) notamment thermoplastique ou réticulé. L'intercalaire de feuilletage, la ou couches intermédiaires peuvent comprendre des feuilles polymère comme les polyurées, les polyoléfine (dont polyéthylène (PE), polypropylène (PP) ou polyisobutylène (P-IB)), le polychlorure de vinyle et ses dérivés (par exemple poly(dichlorure de vinyle) (PVDC)), les polymères styréniques (par exemple polystyrène (PS), acrylostyrène butadiène (ABS), styrène acrylonitrile (SAN)), les polyacryliques (dont polyacrylonitrile (PAN) et le poly(méthacrylate de méthyle) (PMMA) ), les polyester (dont poly(téréphtalate d'éthylène) (PET) et poly(téréphtalate de butylène) (PBT)), le polyoxyméthylène (POM), les polyamides (PA), les polymères fluorés tel que polychlorotrifluoroéthylène (PCTFE), les polycarbonates (PC), les polysulfones aromatiques dont polysulfone (PSU), les polyphénylène éther (PPE), les époxy (EP) seuls ou en mélange et/ou copolymère de plusieurs d'entre eux.

L'intercalaire de feuilletage peut être au moins une feuille à base de PVB ou PU (souple) ou thermoplastique sans plastifiant (copolymère éthylène/acétate de vinyle (EVA), etc.), chaque feuille ayant par exemple une épaisseur entre 0,2 mm et 1,1mm, notamment 0,38 et 0,76mm.

De préférence, toute couche intercalaire (en feuillet) à base de PVB comprend de 70% à 75% de PVB, 25 à 30% de plastifiant et moins de 1% d'adjuvants. Il existe aussi des feuillets PVB avec peu ou sans plastifiant comme le film « MOWITAL LP BF » de la société KURARAY. Aussi l'intercalaire de feuilletage peut être ou comprendre une feuille à base (en) poly(vinyl butyral) (PVB) contenant moins de 15% en poids de plastifiants, de préférence moins de 10% en poids et encore mieux moins de 5% en poids et en particulier sans plastifiant et notamment d'épaisseur d'au plus 0,15mm en particulier de 25 à 100µm, 40 à 70µm et même de 50µm, par exemple le produit Kuraray Mowital^{®}.

L'intercalaire de feuilletage peut être acoustique en particulier comprendre ou être constitué d'une PVB acoustique (tricouche, quadricouche ...). Ainsi, l'intercalaire de feuilletage peut comprendre au moins une couche dite de milieu en matériau plastique viscoélastique aux propriétés d'amortissement vibro-acoustique notamment à base de polyvinylbutyral et de plastifiant, et l'intercalaire, et comprenant en outre deux couches externes en PVB standard, la couche de milieu étant entre les deux couches externes. On peut citer les PVB acoustiques décrits dans les demandes de brevet WO2012/025685, WO2013/175101, notamment teinté comme dans le WO2015079159. La première feuille de verre et la deuxième feuille de verre (minéral) peuvent être de préférence bombées (par les procédés de bombage connus de l'homme du métier). Le vitrage bombé est courbé généralement suivant dans deux directions.

La feuille de verre minérale, peut être produite par le procédé « float » permettant d'obtenir une feuille parfaitement plane et lisse, ou par des procédés d'étirage ou de laminage.

La face étain de la deuxième feuille de verre peut être la face F3 ou la face F4.

A titre d'exemples de verre, on peut citer le verre float (ou verre flotté) de composition sodo-calcique classique, éventuellement durci ou trempé par voie thermique ou chimique, un borosilicate d'aluminium ou de sodium ou toute autre composition.

Dans une réalisation, le vitrage comprend une couche de masquage interne, périphérique, opaque, entre la face F3 et la face F2, et même couvrant le pourtour de la couche isolatrice optique et celui du revêtement réfléchissant les infrarouges, notamment couche de masquage interne en contact avec la face F2 (revêtement sur face F2 ou sur une couche intercalaire en contact avec face F2), notamment définissant le clair de vitre. Et/ou le vitrage peut comprendre une couche de masquage intérieure, périphérique, opaque, sur la face F4, notamment congruente ou de largeur inférieure à la largeur de la couche de masquage interne.

La couche de masquage périphérique opaque, interne, est notamment un émail (noir etc) sur la face F2. Ce peut être un revêtement opaque sur une couche adhésive thermoplastique, notamment couche supérieure intercalaire, en particulier PVB, par exemple revêtement opaque à base de PVB et avec agent colorant sur une face principale d'une couche PVB face orientée face F2 ou face F3.

La couche de masquage interne peut être à 2mm ou 3mm (moins de 1cm ou 5 mm) de la tranche du vitrage ou même jusqu'à la tranche. La couche de masquage interne peut être un bandeau encadrant le vitrage (pare-brise, toit, etc) notamment noir. On opacifie sur toute la périphérie pour cacher des éléments de carrosserie ou joints ou protéger une colle pour le montage sur le véhicule. Cette couche de masquage interne peut délimiter le clair de vitre. Il peut être avantageux que le bord externe de la couche isolatrice optique soit masqué par la couche de masquage interne, ne soit pas dans le clair de vitre.

La largeur de la couche de masquage interne le long des côtés d'un toit de véhicule automobile est généralement inférieure à celle à l'avant ou même à l'arrière.

En particulier pour un toit automobile :
- la largeur de la couche de masquage interne (et même intérieure) le long des bords longitudinaux peut être d'au plus 30cm notamment de 10 à 20cm,
- la largeur de la couche de masquage interne (et même intérieure) le long du bord latéral arrière peut être d'au plus 30cm notamment d'au moins 1 ou 5cm et le long du bord latéral avant d'au plus 60cm notamment d'au moins 1 ou 5cm.

La largeur de la couche de masquage interne est de préférence plus grande que celle de la couche de masquage intérieure.

La couche de masquage intérieure, périphérique, peut être en face F4 notamment faisant face à la couche de masquage interne (et même de nature identique par exemple un émail notamment noir sur deuxième feuille en verre minéral). La couche de masquage intérieure peut être à 2mm ou 3mm (moins de 1cm ou 5 mm) de la tranche du vitrage ou même jusqu'à la tranche. La couche de masquage intérieure, notamment noire, peut être un bandeau et même un cadre. La couche de masquage intérieure peut être adjacente audit revêtement réfléchissant les infrarouges et/ou à la couche isolatrice optique sous jacente, couche de masquage intérieure (notamment émail, noir etc) en contact (accolé, sous ou sur) ou espacé de préférence d'au plus 10mm ou 1mm.

La couche de masquage interne et/ou intérieure peut être un liant organique ou minéral (fritte de verre fondue) avec un agent colorant organique ou inorganique notamment colorant moléculaire ou pigment inorganique.

La couche de masquage interne et/ou intérieure est de préférence une couche continue (aplat avec un bord plein ou en variante un bord en dégradé (ensemble de motifs).

L'épaisseur de couche(s) intermédiaire(s) entre face F2 et face F3 est de préférence d'au plus 1,5mm ou 1,1mm ou 0,9mm et en particulier l'épaisseur intercalaire de feuilletage étant d'au plus 1,1mm ou 0,9mm. L'épaisseur entre face F1 et face F4 est de préférence d'au plus 9mm ou 7mm, notamment pour un véhicule routier.

La première feuille est en verre minéral éventuellement trempé. En particulier pour un vitrage routier la première feuille (extérieure) est d'épaisseur de préférence d'au plus 2,5mm, même d'au plus 2,2mm - notamment 1,9mm, 1,8mm, 1,6mm et 1,4mm- et même d'épaisseur d'au moins 0,7mm.

La deuxième feuille, en particulier en verre minéral, peut être d'épaisseur d'au moins 0,7mm, éventuellement inférieure à celle de la première feuille de verre extérieure, même d'au plus 2,2mm - notamment 1,9mm, 1,8mm, 1,6mm et 1,4mm- ou même d'au plus 1,3mm ou d'au plus 1mm.

L'épaisseur totale des première et deuxième feuilles de verre est de préférence strictement inférieure à 5 ou 4mm, même à 3,7mm.

Les première et deuxième feuilles de verre peuvent être de taille notamment sensiblement identiques, par exemple forme générale rectangulaire. La première feuille (si extérieure) peut avoir une taille plus importante que la deuxième feuille (si intérieure), dépassant ainsi cette deuxième feuille sur au moins une partie de son pourtour, éventuellement deuxième feuille (côté habitacle) plus petite avec une tranche en retrait notamment d'au plus 10 ou 5cm de la tranche de la première feuille de verre, sur un bord ou plusieurs bords (longitudinaux et/ou latéraux) notamment ou sur tout le pourtour.

La première feuille peut être un verre clair avec un revêtement fonctionnel athermique ou même chauffant sur la face F2.

La première feuille en verre minéral peut être à base de silice, sodocalcique, de préférence silicosodocalcique, voire aluminosilicate, ou encore borosilicate. Elle peut présenter une teneur pondérale en oxyde de fer total (exprimé sous la forme Fe₂O₃) d'au moins 0,4% et de préférence d'au plus 1,5 %.

La deuxième feuille en verre minéral peut être notamment à base de silice, sodocalcique, silicosodocalcique, ou aluminosilicate, ou borosilicate. Pour limiter l'absorption présente une teneur pondérale en oxyde de fer total (exprimé sous la forme Fe₂O₃) d'au plus 0,05% (500ppm), de préférence d'au plus 0,03% (300ppm) et d'au plus 0,015% (150ppm) et notamment supérieure ou égale à 0,005%. Le rédox de la deuxième feuille de verre est de préférence supérieur ou égal à 0,15.

Dans le présent texte, la transmission lumineuse est calculée à partir du spectre en transmission entre 380 et 780 nm en prenant en compte l'illuminant A et l'observateur de référence CIE 1964 (10°).

La transmission lumineuse et la teinte de chacune des feuilles de verre sont ajustées grâce à la composition chimique du verre et l'épaisseur de la feuille de verre. La composition chimique du verre comprend une base incolore, de préférence silico-sodo-calcique (mais d'autres verres peuvent être utilisés, notamment des verres borosilicates ou aluminosilicates), ainsi qu'une partie colorante. La partie colorante comprend notamment un ou plusieurs colorants choisis parmi les oxydes de métaux de transition - notamment les oxydes de fer (ferreux et ferrique), l'oxyde de cobalt, l'oxyde de chrome, l'oxyde de nickel, les oxydes de terres rares, notamment l'oxyde d'erbium, et le sélénium.

La première feuille de verre teinté est une feuille de verre ayant par exemple une transmission lumineuse entre 50 et 80%, notamment entre 60 et 75%. Elle comprend une partie colorante par exemple constituée d'oxydes de fer, en une teneur totale comprise entre 0,4 et 1,2% en poids, notamment entre 0,6 et 1,1% en poids. Les verres obtenus sont alors verts, éventuellement vers-jaunes ou verts-bleus selon la proportion de fer ferreux. Selon d'autres exemples, de l'oxyde de cobalt, du sélénium et/ou de l'oxyde d'erbium sont ajoutés afin de conférer une teinte, par exemple bleue ou grise. Mieux encore, la première feuille de verre teinté (surteintée) est une feuille de verre ayant par exemple une transmission lumineuse entre 5 et 50%, notamment entre 8 et 40% et même d'au plus 20%. Elle comprend une partie colorante par exemple constituée d'oxydes de fer, en une teneur totale comprise entre 1,0 et 2,3 en poids, notamment entre 1,1 et 2,0% en poids, ainsi que des oxydes de cobalt et de chrome et/ou du sélénium. La partie colorante comprend par exemple les colorants suivants, dans les teneurs pondérales ci-après définies : Fe₂O₃ (fer total) de 1,2 à 2,3%, notamment de 1,5 à 2,2%, CoO de 50 à 400 ppm, notamment de 200 à 350 ppm, Se de 0 à 35 ppm, notamment de 10 à 30 ppm. Le rédox est de préférence compris entre 0,1 et 0,4, notamment entre 0,2 et 0,3. On entend par rédox le rapport pondéral entre la teneur en fer ferreux (exprimée en FeO) et la teneur en fer total (exprimée en Fe₂O₃). Les verres obtenus sont notamment verts ou gris.

La deuxième feuille peut être en verre organique en particulier à base de polyuréthane (PU), de polycarbonate (PC), de poly(méthacrylate de méthyle) (PMMA), de poly(chlorure de vinyle) (PVC).

La deuxième feuille en verre organique peut être flexible pour suivre la courbure de la première feuille bombée ou la deuxième feuille verre organique peut être préformée.

Avec un verre organique comme le PC ou le PMMA, on préfère (pour davantage de compatibilité chimique) au PVB comme couche intercalaire inférieure le polyuréthane thermoplastique (TPU) ou encore une matière polymère réticulé. On peut choisir aussi un EVA thermoplastique ou thermodurci.

Dans la présente invention, l'expression verre trempé signifie verre trempé thermiquement en l'absence de toute précision, et de préférence verre trempé pendant une opération de bombage du verre.

La deuxième feuille de verre est une feuille claire (ou extraclaire) ayant par exemple une transmission lumineuse d'au moins 85%, voire d'au moins 90%. Elle ne comprend généralement pas de partie colorante à l'exception d'impuretés inévitables, en particulier les oxydes de fer, en une teneur totale comprise entre 0,005 et 0,200% en poids, notamment entre 0,010 et 0,150% en poids, voire entre 0,030 et 0,120% en poids.

La deuxième feuille de verre peut (selon le rendu esthétique, l'effet optique souhaité, la destination du vitrage, etc.) être un verre clair (par exemple transmission lumineuse T_{L} supérieure ou égale à 90% pour une épaisseur de 4 mm), par exemple un verre de composition standard sodocalcique comme le Planilux^{®} de la société Saint-Gobain Glass, et même extra-clair (par exemple T_{L} supérieure ou égale à 91,5% pour une épaisseur de 4 mm), par exemple un verre silico-sodo-calcique avec moins de 0,05% de Fe III ou de Fe₂O₃ comme le verre Diamant^{®} de Saint-Gobain Glass, ou Optiwhite^{®} de Pilkington, ou B270^{®} de Schott, ou d'autre composition décrite dans le document WO04/025334.

Le verre de la première feuille de verre peut avoir subi un traitement chimique ou thermique du type durcissement, recuit ou trempe (pour une meilleure résistance mécanique notamment) ou bombage, et est généralement obtenu par procédé float. Le vitrage lumineux peut présenter une transmission lumineuse TL non nulle dans tout ou partie du clair de vitre (généralement encadré par couche de masquage). Pour un vitrage qui est un toit, on préfère une transmission lumineuse TL non nulle et même d'au moins 0,5% ou d'au moins 2% et d'au plus 10% et même d'au plus 8%.

La deuxième feuille de verre peut être alternativement en verre organique (de préférence rigide, semi rigide) comme un polyméthacrylate de méthyle (PMMA)- de préférence avec intercalaire de feuilletage (PU)-, un polycarbonate (PC)-de préférence avec intercalaire de feuilletage PVB-.

On peut notamment choisir comme première feuille de verre / intercalaire de feuilletage/ deuxième feuille de verre :
- verre minéral / PVB (acoustique etc)/ verre minéral,
- voire verre minéral / intercalaire de feuilletage/ polycarbonate,

Pour le guidage, la deuxième feuille de verre minérale est de préférence claire et même extraclaire ou en verre organique clair et même extraclair.

Pour la thermique la première feuille de verre (ou autre couche) est teintée et de préférence surteinté.

On préfère que la première couche teintée et la ou les couches intermédiaires sous la première couche teintée présentent un coefficient d'extinction k, partie imaginaire de l'indice de réfraction complexe d'au plus 10⁻⁷ dans le visible (en particulier à la longueur d'onde de référence par exemple 550nm et même sur la gamme spectrale de la source). La source de lumière (visible) est de préférence :
- un ensemble de diodes électroluminescentes (sur un premier support à circuit imprimé comme un PCB pour « printed circuit board » en anglais), notamment une barrette,
- ou encore source de lumière qui comprend une fibre optique extractrice couplée avec source primaire de lumière (diode(s) électroluminescentes etc),

Les diodes peuvent être (pré)assemblées sur une ou des supports PCB (PCB pour Printed Circuit Board en anglais) ou supports avec des pistes d'alimentation électrique, cs supports PCB pouvant être fixées à d'autres supports (profilés, etc.). Le support PCB est généralement mince, notamment d'épaisseur inférieure ou égale à 3 mm, voire 1 mm, voire 0,1 mm ou inférieur le cas échéant à l'épaisseur d'un intercalaire de feuilletage. Plusieurs supports PCB peuvent être prévus, notamment si les zones à éclairer sont très distantes entre elles. Le support PCB peut être en matériau souple, diélectrique ou électroconducteur (métallique tel qu'aluminium etc), être composite, plastique, etc.

De préférence, la source de lumière est périphérique notamment située sur une partie du vitrage située à l'intérieur de la garniture du véhicule, ce qui a pour fonction essentielle de la soustraire aux yeux des passagers du véhicule ainsi que de la protéger des poussières et agressions externes.

La source de lumière (diodes etc) peut être espacée de la deuxième feuille de verre ou collée par exemple sur la tranche ou liée à la face F4 en périphérie.

On souhaite voir la zone lumineuse à l'intérieur de l'habitacle (cas d'un toit en particulier ou signalisation, information pour le conducteur ou au tout autre passager).

Le vitrage peut comprendre plusieurs sources de lumière, notamment à diodes électroluminescentes. Naturellement on peut avoir plusieurs sources de lumière (une ou plusieurs séries de diodes) couplées à la deuxième feuille.

L'injection de lumière issue de la source de lumière en couplage optique avec la deuxième feuille, de préférence un ensemble de diodes électroluminescentes, est par exemple:
- par une tranche de la deuxième feuille de verre, éventuellement avec une encoche
- ou par une paroi délimitant un trou fermé de la deuxième feuille de verre, notamment trou décalé d'un clair de vitre, faisant face à une couche de masquage interne,
- ou par un élément de redirection de lumière, local comme un film optique redirecteur, coté face F3 ou face F4, la source de lumière étant alors en regard ou décalée de la face F4, notamment couplage optique direct ou par l'intermédiaire d'une optique, notamment source de lumière et élément de redirection de lumière décalés d'un clair de vitre, faisant face à une couche de masquage interne.

La zone d'extraction (diffusante) est par exemple de largeur d'au moins 0,5mm, ou moins 1mm, ou même au moins 1cm, et même d'au moins 5cm (largeur naturellement à distinguer de l'épaisseur), zone pleine et/ou comportant un ensemble de motifs discontinus (discrets, ponctuels (3D), par exemple géométriques, linéaires (2D) notamment distincts ou identiques par exemple espacés d'au moins 0,5mm), la zone diffusante pouvant occuper une surface de longueur de préférence supérieure à 5cm et même à 10cm.

La zone diffusante peut occuper au moins 60%, 70%, 80%, 90% de la face principale du vitrage de préférence être espacé du couplage optique d'au moins 20mm.

Le vitrage lumineux peut comprendre une pluralité de zones diffusantes de taille et/ou formes identiques ou distinctes. La zone d'extraction peut donc couvrir une partie ou la totalité du vitrage feuilleté selon l'éclairage ou l'effet recherché (sous forme de bandes disposées en périphérie d'une des faces pour former un cadre lumineux, des logos ou de motifs, etc.).

La zone diffusante peut être en plusieurs zones, par exemple chacune avec des motifs, identiques ou distincts, continus ou discontinus, et peut être de toute forme géométrique (rectangulaire, carré, en triangle, circulaire, ovale, etc.), et peut former un dessin, un signalétique (flèche, lettre...).

Le vitrage lumineux peut comprendre plusieurs zones d'extraction de lumière (couches diffusantes) pour former plusieurs zones lumineuses sur le vitrage.

Par exemple les moyens d'extraction de lumière comprennent :
- une texturation de la deuxième feuille, face F3 ou face F4 et même en contact avec la couche isolatrice optique sus jacente
- ou encore un film extracteur sur la deuxième feuille, face F3 ou en face F4 et en contact avec la couche isolatrice optique sus jacente
- ou une couche diffusante comportant un liant et des particules diffusantes et/ou des pores, sur la deuxième feuille, face F3 ou face F4 et en contact avec la couche isolatrice optique sus jacente
- ou une zone locale diffusante dans la deuxième feuille, comportant des particules diffusantes et/ou des pores, ou une gravure laser.

En particulier, les moyens d'extraction de la lumière guidée comportent (voire constitués de) une couche diffusante comprenant des éléments diffusants dans une matrice. (organique ou minéral par exemple un émail) pour former une zone diffusante (lumineuse à l'état on).

Les éléments diffusants comprennent de préférence et même sont constitués essentiellement des particules (diélectriques, organiques ou minérales par exemple oxydes métalliques) dispersées et liées par la matrice, particules de taille d'au plus 30µm ou d'au plus 10µm. Les particules sont par exemple choisies parmi des particules de TiO₂, SiO₂, CaCO₃, ZnO, Al₂O₃, ZrO₂.

La couche diffusante peut être sur la face principale FB de l'intercalaire de feuilletage directement. L'autre face principale de l'intercalaire de feuilletage (en contact adhésif avec une feuille de verre) peut être nue ou revêtue notamment en périphérie d'une couche de masquage (encre noir etc).

L'épaisseur de la couche diffusante peut être d'au plus 20µm et même d'au plus 10µm et même d'au moins 1µm.

La couche diffusante est par exemple un revêtement transparent, la matrice étant organique et transparente. La matrice transparente, notamment déposée par voie liquide, peut être en matériau choisi parmi un liant polymérique comme une peinture notamment une laque, une résine. En particulier, la matrice transparente peut être constituée essentiellement de résine notamment résine PVB.-En particulier, le revêtement transparent peut comporter et même est constitué essentiellement de résine, notamment résine PVB, et d'éléments diffusants, notamment des particules diffusantes notamment d'au moins 50nm, 80nm ou 100nm et de préférence d'au plus 30µm ou 10µm ou 1µm.Le revêtement diffusant transparent peut être constitué essentiellement de la résine et desdits éléments diffusants (particules et/ou pores etc) en particulier des particules. La résine peut être compatible chimiquement avec l'intercalaire de feuilletage qui est par exemple un PVB. La résine peut être une résine PVB avec l'intercalaire de feuilletage qui est un PVB.

Le vitrage est de préférence un toit, qui peut être ouvrant ou fixe.

L'invention porte aussi sur un véhicule routier incorporant le vitrage défini précédemment.

Dans la présente demande on entend par véhicule routier, une voiture, notamment un utilitaire (camionnette, fourgonnette, estafette) inférieur à 3,5 tonnes (utilitaire léger) ou encore un camion ou encore une navette, petit véhicule de transport en commun, privé ou public. Les vitrages latéraux peuvent être dans des portières coulissantes. Le vitrage lumineux peut être dans une porte arrière.

La présente invention sera mieux comprise et d'autres détails et caractéristiques avantageuses de l'invention apparaitront à la lecture des exemples de vitrages lumineux de véhicule selon l'invention illustrés.

### Exemples de référence

Un toit auto lumineux peut comporter un vitrage feuilleté, avec deux feuilles de verre, et avec en face F4 un revêtement réfléchissant les infrarouges qui comporte une couche d'oxyde d'étain et d'indium (ITO) entre des sous couches diélectriques et des surcouches diélectriques.

Les feuilles de verre sont de type aluminosilicate. L'intercalaire de feuilletages en Poly(butyral vinylique) (« PVB ») de 0,76 mm.

Les couches diélectriques comprennent :
- des couches à base de nitrure du silicium (Si3N4, n = 2,0 à550nm),
- des couches à base d'oxyde de silicium (SiO2, n = 1,5 à 550nm).

Un premier empilement connu dit Ref1 comporte dans cet ordre :
V/ Si3N4 (30nm)/ SiO2 (17nm)/ITO (72nm)/ Si3N4 (9nm)/ SiO2 (50nm)/

Un deuxième empilement connu dit Ref2 comporte dans cet ordre :
V/ Si3N4 (15nm)/ SiO2 (10nm)/ITO (100nm)/ Si3N4 (15nm)/ SiO2 (65nm)/

Les conditions de dépôt des couches, déposées par pulvérisation (pulvérisation dite « cathodique magnétron »), sont résumées dans le tableau 1.

**[Tableau 1]**

| Couche | Cible employée | Pression de dépôt | Gaz |
|---|---|---|---|
| ITO | In₂O₃ 90%, SnO₂ 10% pds | 2.10⁻³ mbar | Ar/(Ar + O2) à 99 % |
| SiO2 | Si:Al à 92:8 % en pds | 2.10⁻³ mbar | Ar/(Ar + O2) à 62.5 % |
| Si3N4 | Si:Al à 92:8 % en pds | 3,2.10⁻³ mbar | Ar /(Ar + N2) à 55 % |

La transmission lumineuse de la feuille de verre extraclaire revêtue de l'empilement Ref1 ou Ref 2 est respectivement de 89,3% et 88,5%.

Ces revêtements ne peuvent pas être utilisés directement en face F4 dans des vitrages lumineux car ils ne présentent pas en mode guidé une couleur suffisamment stable dans le verre. Les valeurs de Rgm sont trop faibles de 90,9%. Cela explique pourquoi lorsque la source lumineuse est une lumière rouge, on observe rapidement une extinction de cette lumière rouge plus on s'éloigne de la zone d'injection de lumière

Pour surmonter ce problème technique, on place sur la face F4, sous le revêtement réfléchissant les infrarouges, une couche isolatrice optique diélectrique transparente ayant un couple indice de réfraction épaisseur judicieusement sélectionnés pour avoir une haute valeur de Rgm de préférence d'au moins 95%, mieux 97% ou même 99%.

Les figures suivantes illustrent diverses configurations de vitrage automobile lumineux avec une telle couche isolatrice optique.

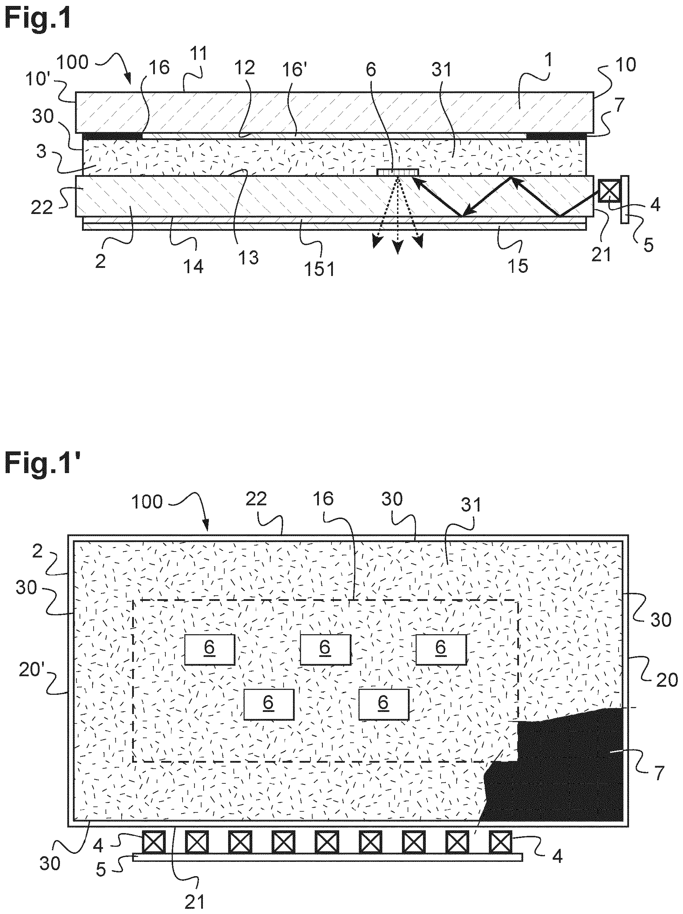

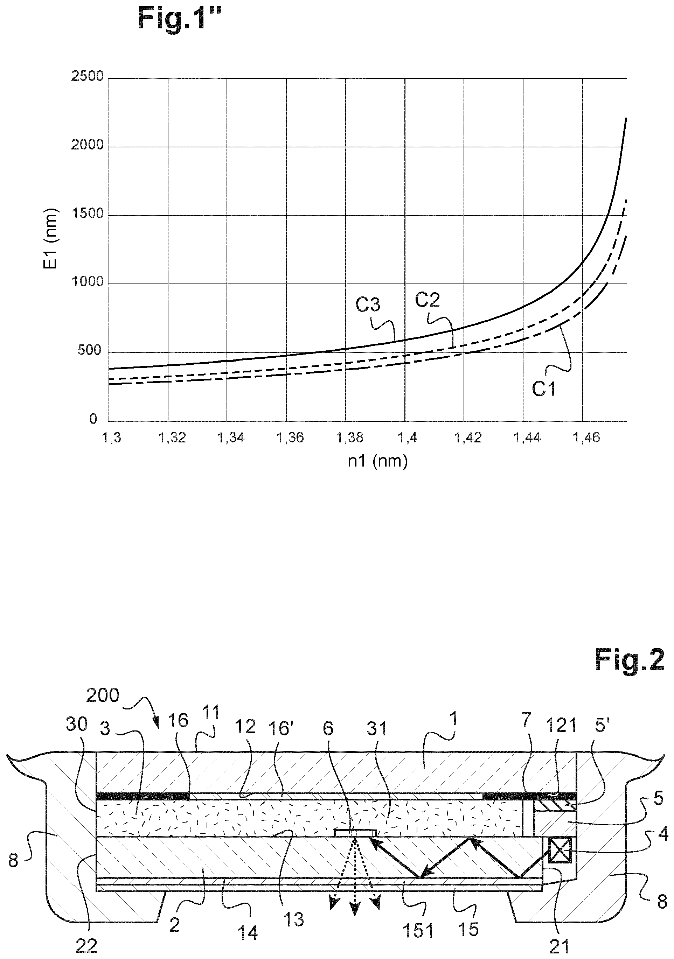

[Fig. 1] - la figure 1 représente une vue schématique en coupe d'un toit feuilleté lumineux de véhicule automobile selon l'invention dans un premier mode de réalisation
[Fig. 1'] - la figure 1' représente une vue schématique de face du toit de la figure 1
[Fig. 1"] - la figure 1" montre un graphe avec trois courbes C1, C2, C3 indiquant l'épaisseur minimale E1min en fonction de n1
[Fig. 2] - la figure 2 représente une vue schématique en coupe d'un vitrage feuilleté lumineux de véhicule automobile dans un deuxième mode de réalisation par injection de lumière périphérique

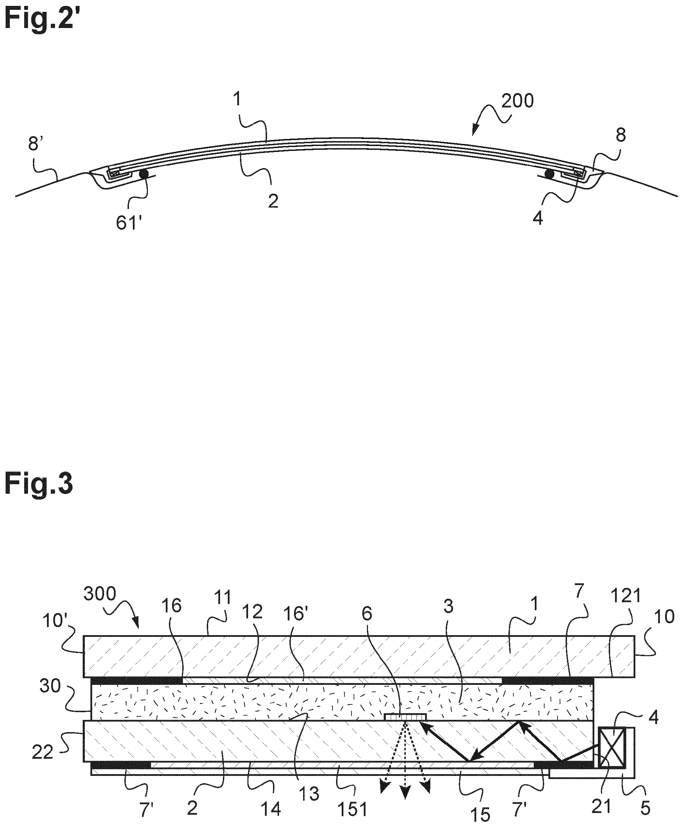

[Fig. 2'] - la figure 2' représente une vue schématique en coupe d'un vitrage feuilleté lumineux de véhicule automobile qui est un toit monté dans un véhicule tel que celui en figure 2
[Fig. 3] - la figure 3 représente une vue schématique en coupe d'un vitrage feuilleté lumineux de véhicule automobile dans un troisième mode de réalisation par injection de lumière périphérique

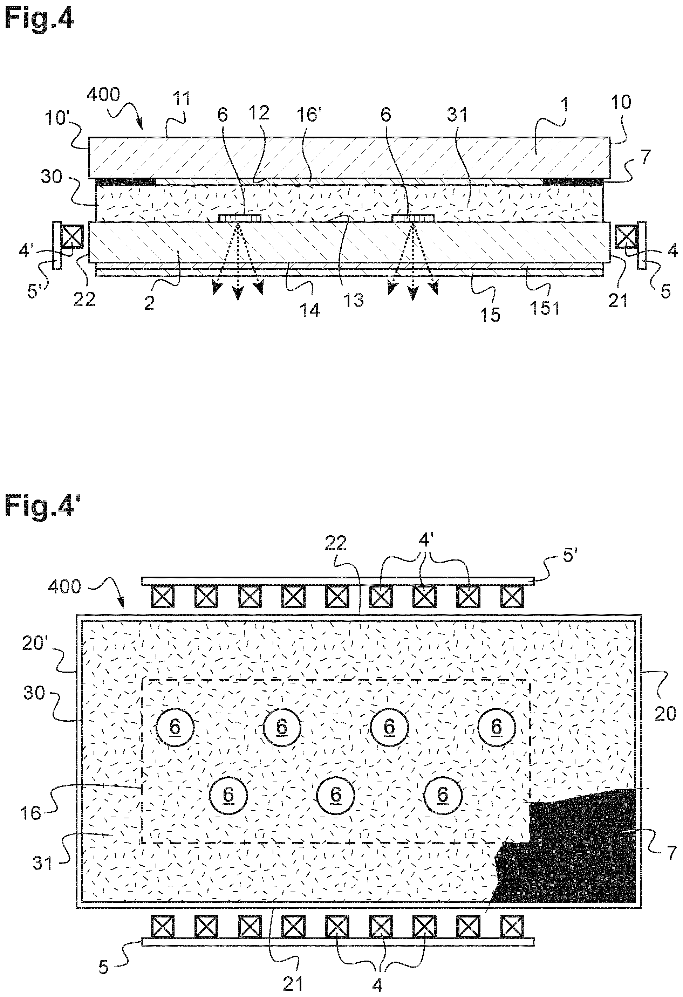

[Fig. 4] - la figure 4 représente une vue schématique en coupe d'un vitrage feuilleté lumineux de véhicule automobile dans un quatrième mode de réalisation par injection de lumière périphérique
[Fig. 4'] - la figure 4' représente une vue schématique de face du vitrage de la figure 4

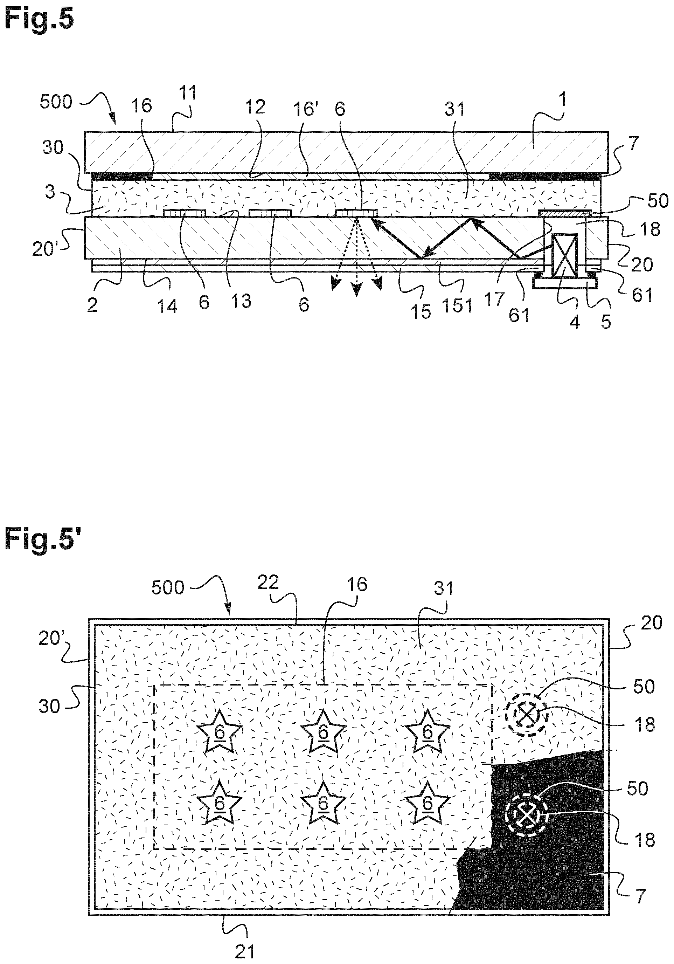

[Fig. 5] - la figure 5 représente une vue schématique en coupe d'un vitrage feuilleté lumineux de véhicule automobile dans un cinquième mode de réalisation par injection de lumière via une paroi interne de la deuxième feuille de verre trouée
[Fig. 5'] - la figure 5' représente une vue schématique de face du vitrage de la figure 5

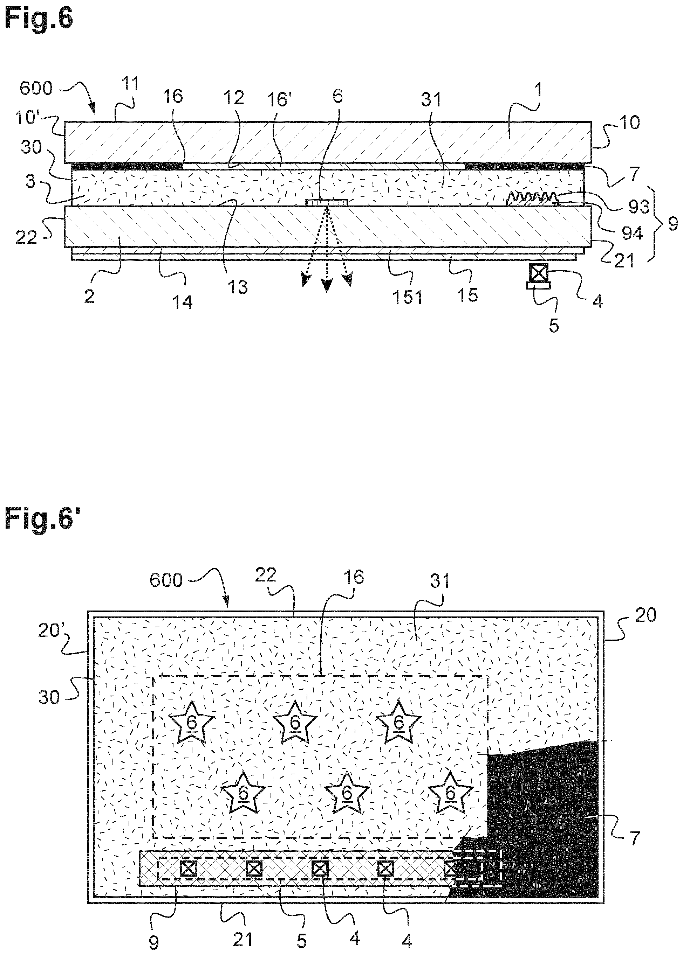

[Fig. 6] - la figure 6 représente une vue schématique en coupe d'un vitrage feuilleté lumineux de véhicule automobile dans un sixième mode de réalisation par injection de lumière traversant la deuxième feuille
[Fig. 6'] - la figure 6' représente une vue schématique de face du vitrage de la figure 6. On précise que par un souci de clarté les différents éléments des objets représentés ne sont pas nécessairement reproduits à l'échelle.

La figure 1 représente une vue schématique en coupe ici latérale d'un toit feuilleté lumineux de véhicule 100 selon l'invention dans un premier mode de réalisation par éclairage périphérique. La figure 1' représente une vue schématique de face du toit de la figure 1.

Il s'agit ici d'un toit feuilleté de voiture, 100 rectangulaire et bombé, qui comporte :
- une première feuille de verre 1, par exemple rectangulaire (de dimensions 300X300 mm par exemple), avec une composition teintée (verre VENUS VG10 ou TSA 4+ commercialisée par la société Saint-Gobain Glass) par exemple d'épaisseur égale à 2,1 mm, avec une première face principale 11 correspondant à la face F1 une deuxième face principale 12 côté intérieure dite F2 et un chant (tranches longitudinales 10 et 10'), la face F2 étant revêtue éventuellement d'un revêtement athermique à l'argent 16' ou encore chauffant (de préférence alors le verre 1 est clair) etc,
- une deuxième feuille de verre, minéral de préférence 2, de même dimensions que la première feuille 1, formant vitrage interne, côté habitacle, en verre minéral, présentant une troisième face principale 11 correspondant à la face F3 et une quatrième face principale 12 qui est la face F4, et un chant (tranches longitudinales 21 et 22 - par exemple une feuille de verre silicosodocalcique, extraclair comme verre Diamant commercialisée par la société Saint-Gobain Glass, d'épaisseur égale par exemple à 2,1 mm, verre d'indice de réfraction n0 de l'ordre de 1,52 à 550nm ou le verre Optiwhite de 1,95mm,
- entre la face F2 et la face F3 une couche intermédiaire comportant au moins une couche intercalaire de feuilletage 3, avec une tranche 30 ici longitudinale éventuellement décalée des tranches longitudinales 10, 10' vers le centre du verre (donc en retrait), ici une seule couche (un seul feuillet) 31 de PVB clair ou teinté de 0,76mm en contact adhésif avec le revêtement athermique 16' (ou avec la face F2 en son absence) et en contact adhésif avec la face F3 et d'indice de réfraction n2 dans le visible avec n2<n0. La deuxième face F2 comporte une couche de masquage interne 7 formant un cadre de masquage par exemple un émail noir, délimitant un clair de vitre 16 (clair de jour) ici rectangulaire (cf figure 1').

Des diodes électroluminescentes 4 s'étendent le long du bord longitudinal de couplage 21 de la deuxième feuille de verre 2. Il s'agit ici de diodes à émission frontale. Ainsi ces diodes 4 sont alignées sur un support PCB 5, par exemple une barrette en parallélépipède. Le support PCB 5 est fixé par exemple par de la colle 7 (ou un adhésif double face) sur le bord de la face. On peut avoir d'autres barrettes, au moins sur le bord opposé par exemple.

Alternativement la source de lumière peut être une ou des sources primaires (diodes etc) couplé directement à un guide, le long de tranche de couplage, par exemple fibre optique extractrice avec zone de sortie de lumière.

Le vitrage lumineux 100 peut avoir une pluralité de zones d'extraction 6 de la lumière guidée dans la deuxième feuille, notamment de géométrie donnée (rectangulaire, carré, rond ...). Par exemple il s'agit d'une couche diffusante 6 (émail, encre, sérigraphié etc) qui est un revêtement sur la troisième face F3 et même alternativement ou cumulativement sur la quatrième face F4, couche diffusante de préférence dans le clair de vitre 16. Alternativement ce peut être un film extracteur local posé ou collé localement sur la troisième face F3 voire quatrième face F4 (à reliefs ou avec couche diffusante ou diffusant en masse).

Par exemple la distance entre l'extraction 6 et les diodes est d'au moins 10 ou 40mm.Par exemple l'extraction occupe de 10 à 100% du clair de vitre,

On peut prévoir plusieurs séries de diodes 4 (un bord, deux bords, trois bords, sur toute la périphérie) pilotées indépendamment et même de couleur différente. On peut choisir des diodes émettant en lumière blanche ou colorée pour un éclairage d'ambiance, de lecture... On peut choisir une lumière rouge pour de la signalisation éventuellement en alternance avec de la lumière verte. Le support de diodes 5 peut être collé à la tranche 21.

Le rayon lumineux (après réfraction sur la tranche 21) se propage par réflexion totale interne (au niveau de la face F3 et de la face F4) dans la deuxième feuille 2 formant un guide de lumière.

Selon l'invention, la face F4 comporte une couche isolatrice optique 151, d'indice de réfraction n1 dans le visible avec n1 < n2. C'est un revêtement, le dépôt est par tout moyen (liquide, physique en phase vapeur (magnétron etc), chimique en phase vapeur etc) et d'épaisseur E1 submillimétrique.

La couche isolatrice optique est surmontée d'un revêtement réfléchissant les infrarouges 15, transparent, lié à la face F4, monocouche ou multicouches, comportant au moins une couche fonctionnelle électroconductrice par exemple d'oxyde transparent conducteur, en particulier de l'ITO. Le revêtement réfléchissant les infrarouges comporte de préférence une première sous couche diélectrique d'indice de réfraction supérieur à n2, de préférence d'indice de réfraction d'au moins 1,7, notamment nitrure de silicium, la couche isolatrice optique est en contact avec la première sous couche diélectrique. En particulier revêtement réfléchissant les infrarouges 15 est l'un des empilements précités Ref1 et Ref2.

La figure 1" montre un graphe avec trois courbes C1, C2, C3 indiquant l'épaisseur minimale E1min en fonction de n1.

Pour un revêtement réfléchissant les infrarouges absorbant 100% de la lumière, les inventeurs ont alors déterminé comment atteindre avec la couche d'isolation optique un paramètre Rgm plus élevé, de préférence d'au moins 95% ou même 97% ou encore 99% dénotant une très faible absorption et donc une meilleure préservation du mode guidé au sens de son intensité totale.

Ainsi, E1 et n1 sont choisis tels que la couche isolatrice optique présente un paramètre Rgm qui est la réflexion en mode guidé à l'interface deuxième feuille/ couche isolatrice optique d'au moins 95%, de préférence d'au moins 97% et même d'au moins 99%. Dans une réalisation, des simulations ont été faites et validées avec n0=1,52, n2=1,485. Pour Rgm de 95%, l'épaisseur E1, en nm, est dans une première région délimitée d'un graphique de l'épaisseur E1 en fonction de n1, avec une première limite inférieure incluse E1a définie par une première courbe C1 de l'épaisseur en fonction de n1 d'équation suivante : $E 1 a \left(n1\right) = b 1 - {a}_{11} * \left(n1-{n}_{r 1}\right) - {a}_{31} * {\left(n1-{n}_{r 1}\right)}^{3} - {a}_{51} * {\left(n1-{n}_{r 1}\right)}^{5}$ avec nᵣ₁=1,499; b1=122nm; a₁₁=30,1nm; a₃₁=-9,44*10⁻³nm; a₅₁=5,69*10⁻⁶nm

Et de préférence, pour Rgm de 97%, l'épaisseur E1 en nm, est dans une deuxième région délimitée dudit graphique (plus restreinte que la première région), avec une deuxième limite inférieure incluse E1b, définie par une deuxième courbe C2 (au-dessus de C1) de l'épaisseur en fonction de n1 d'équation suivante : $E 1 b \left(n1\right) = b 2 - {a}_{12} * \left(n1-{n}_{r 2}\right) - {a}_{32} * {\left(n1-{n}_{r}\right)}^{3} - {a}_{52} * {\left(n1-{n}_{r 2}\right)}^{5}$ avec nᵣ₂=1,495, b2=154nm; a₁₂=30,5nm;a₃₂=-7,51*10⁻³nm; a₅₂=3,05*10⁻⁶nm

Et même encore plus préférentiellement, pour Rgm de99%, l'épaisseur E1 en nm, est dans une troisième région délimitée dudit graphique (plus restreinte que la première ou deuxième région), avec une troisième limite inférieure incluse E1c, définie par une troisième courbe C3 (au-dessus de C1 et C2) de l'épaisseur en fonction de n1 d'équation suivante : $E 1 c \left(n1\right) = b 3 - {a}_{13} * \left(n1-{n}_{r 3}\right) - {a}_{33} * {\left(n1-{n}_{r 3}\right)}^{3} - {a}_{53} * {\left(n1-{n}_{r 3}\right)}^{5}$

Avec nᵣ₃=1,492 b3=211nm; a₁₃=34,4nm; a₃₃=-6,43*10⁻³nm; a₅₃=1,99*10⁻⁶nm

Et E1 est de préférence d'au plus 3µm ou même d'au plus 1,5µm.

Si on préfère E1 d'au plus 1µm, il faut n1 respectivement d'au moins 1,466, 1,4685, 1,453. Si on préfère E1 d'au plus 800nm, il faut n1 respectivement d'au moins 1,461, 1,453, 1,438. Si on préfère E1 d'au plus 600nm, il faut n1 respectivement d'au moins 1,442, 1,43, 1,40.

Si l'épaisseur peut être d'au moins 1,2 µm (film autoportant, revêtement par voie liquide) on peut avoir n1 d'au moins 1,472, 1,470, 1,461.

Au-delà respectivement 1,3µm, 1,6µm, 2,2µm n1 est dans une gamme la plus large possible tant que n1<n2.

Par exemple si on veut une couche isolatrice optique très fine, on choisit n1= 1,35 et E1 = 500nm.

Par exemple si on peut réaliser une couche isolatrice optique plus épaisse, on choisit n1 très proche de n2 (au maximum 1,46 environ) et E1 = 1µm par exemple une couche sol-gel de silice poreuse avec au plus 10% en volume de pores.

En variante on choisit une couche isolatrice optique acrylate par exemple avec n1= 1,4 avec E1 à partir de 600nm ou même 1 ou 2 µm si cela facilite le dépôt. On colle un verre clair ultra mince avec le revêtement 15 sur la face principale côté habitacle.

On peut choisir aussi comme couche isolatrice optique 151 une couche adhésive en particulier revêtement adhésif (LOCA) notamment UV réticulé ou film PSA, couche adhésive est alors en contact avec un verre clair ultra mince porteur côté habitacle du revêtement réfléchissant les infrarouges.

Par ailleurs, en variante la deuxième feuille est en verre organique en particulier à base de polyuréthane (PU), de polycarbonate (PC), de poly(chlorure de vinyle) (PVC), de poly(méthacrylate de méthyle) (PMMA). Avec un verre organique comme le PC ou le PMMA, on préfère (pour davantage de compatibilité chimique) au PVB comme couche intercalaire le polyuréthane thermoplastique (TPU) ou encore un EVA thermoplastique ou thermodurci. On ajuste n1 et E1 en fonction de n2.

Ce vitrage lumineux feuilleté 100 peut former alternativement un pare-brise avant à signalisation interne. La couche diffusante forme par exemple un signal anti collisions notamment formant une bande le long du bord longitudinal inférieur. Par exemple, la lumière s'allume (rouge) lorsqu'un véhicule de devant est trop proche.

Ce vitrage lumineux feuilleté 100 peut former alternativement une custode avant ou arrière. La couche diffusante 6 forme par exemple une signalisation intérieure ou un motif décoratif etc.

La figure 2 représente une vue schématique en coupe d'un vitrage feuilleté lumineux de véhicule automobile 200 dans un deuxième mode de réalisation par injection de lumière périphérique

Ce deuxième mode de réalisation diffère du premier mode d'abord en ce que des diodes à émission latérale 4 sont logées dans un évidement (encoche périphérique) de la tranche 21. Ainsi ces diodes 4 sont alignées sur un support PCB 5, par exemple une barrette en parallélépipède, de préférence le plus opaque possible (non transparent) et leurs faces émettrices sont parallèles au support PCB et en regard de la tranche 21 dans la partie de tranche évidée. Le support PCB est fixé par exemple par de la colle 5' (ou un adhésif double face) sur le bord 121 de la face F2 12, et ici est engagé dans une gorge entre les faces F2 et F3 rendu possible par le retrait suffisant de la tranche 30 de l'intercalaire 3. La bande périphérique de masquage 7 en émail opaque (noir) peut masquer le support PCB 5 et même de la lumière sortante dans cette zone.

On réduit au maximum la distance des diodes et la tranche 10, par exemple de 1 à 2mm L'espace entre chaque puce et la tranche 10 couplée optiquement peut être protégé de toute pollution : eau, chimique etc, ceci à long terme comme pendant la fabrication du vitrage lumineux 100.

Le vitrage lumineux 200 a en outre une encapsulation polymérique 8 par exemple en polyuréthane noir, notamment en PU-RIM (réaction in mold en anglais). Elle est biface en bordure du vitrage. Cette encapsulation, assure une étanchéité à long terme (eau, produit de nettoyage...). L'encapsulation apporte aussi une bonne finition esthétique et permet d'intégrer d'autres éléments ou fonctions (inserts de renforcement...). Comme décrit dans le document WO2011092419 ou le document WO2013017790, l'encapsulation polymérique peut avoir un évidement traversant fermé par un couvercle amovible pour placer ou remplacer les diodes.

Le toit 200 peut former par exemple un toit panoramique lumineux fixe de véhicule automobile comme une voiture, monté par l'extérieur sur la carrosserie 8' via un adhésif 61' comme montré en figure 2'.

La figure 3 représente une vue schématique en coupe d'un vitrage feuilleté lumineux 300 de véhicule automobile dans un troisième mode de réalisation par injection de lumière périphérique.

Une couche de masquage intérieure 7' périphérique est sur la quatrième face F4 14 notamment de largeur inférieure à la largeur de la couche de masquage interne 7. Par exemple un émail noir ou une encre noire sur une couche intermédiaire (couche intercalaire, PVB etc).

En outre, le support de diodes 5 est en L avec une partie en regard de la quatrième face F4 14. Par exemple la deuxième feuille 2 est plus petite que la première feuille 1 donc les diodes sont sous la partie dépassante de la deuxième face 121. Les diodes sont à émission latérale ou frontale.

La couche isolatrice optique 151 est adjacente à la couche de masquage intérieure 7' et éventuellement espacé ou en contact avec la couche de masquage intérieure 7' avec éventuel recouvrement. Le revêtement réfléchissant les infrarouges 15 peut être sur la couche isolatrice optique 151 uniquement (même étendue) ou dépasser sur la couche de masquage intérieure 7'.

La figure 4 représente une vue schématique en coupe d'un vitrage feuilleté lumineux 400 de véhicule automobile dans un quatrième mode de réalisation par injection de lumière périphérique. La figure 4' représente une vue schématique de face du vitrage de la figure 4.

Ce mode de réalisation diffère du premier mode en ce qu'on ajoute un deuxième module de diodes 4', 5' le long du bord opposé longitudinal 22.

La figure 5 représente une vue schématique en coupe d'un vitrage feuilleté lumineux de véhicule automobile 500 dans un cinquième mode de réalisation par injection de lumière via une paroi interne de verre. La figure 5' représente une vue schématique de face du vitrage de la figure 5.

Ce mode de réalisation diffère du premier mode 100 par l'injection de lumière et la localisation de la source de lumière 4.

Des diodes 4 sur un support 5 sont dans un trou traversant 18 (décalé du clair de vitre 16), de forme circulaire, de la deuxième feuille de verre 2 délimité par une paroi interne 17 et fermé par un capot 50 comme une feuille métallique ou tout autre obturateur optique côté troisième face F3 13. Le support de diodes 5 forme un couvercle collé par une colle 61 à la quatrième face F4 14.

Et comme montré en figure 5' on a dédoublé les moyens en rajoutant d'autres diodes 4 dans un autre trou traversant 18 (décalé du clair de vitre 16), de forme circulaire fermé par un autre capot 50. Les trous sont ici coté bord avant latéral du toit 20.

La couche de masquage interne 7 est souvent plus large à l'avant que du côté du bord arrière 20'.

La figure 6 représente une vue schématique en coupe d'un vitrage feuilleté lumineux de véhicule automobile 600 dans un sixième mode de réalisation par injection de lumière traversant un verre. La figure 6' représente une vue schématique de face du vitrage de la figure 6.

Ce mode de réalisation diffère du premier mode 100 par l'injection de lumière et la localisation de la source de lumière 4.

Des diodes 4 (ici à émission frontale) sur un support 5 sont en regard (ou décalés) de la quatrième face principale 14 et le couplage optique avec la deuxième feuille 2 se fait via un élément de redirection de lumière pour le guidage, local comme un film optique redirecteur 9, réflecteur, coté troisième face principale F3 (ou quatrième face principale F4) par exemple faisant face à la couche de masquage interne 7.

Par exemple c'est un film prismatique polymère avec des prismes 93 et une partie plane 94 collée ou fixée par succion à la troisième face F3 13 et d'épaisseur entre 100 et 300µm couvert par la couche intercalaire 31. Le film forme une bande longitudinale comme la source de lumière de type linéaire 4 le long d'un bord longitudinal du toit par exemple. Le film optique redirecteur 9 peut aussi être alternativement dans la couche intercalaire 3 par exemple entre une couche intercalaire inférieure claire et une couche intercalaire teintée. On peut orienter les prismes en direction de la face F3.

On peut doubler les moyens donc en ajoutant une autre source lumineuse, un autre film redirecteur le long de l'autre bord longitudinal 10'.

On peut ajouter dans ces vitrages des exemples, un dispositif électroactif, ou photovoltaïque, de préférence entre (et même en contact avec) la première couche teintée qui est de préférence une couche intercalaire (PVB) et une couche intercalaire (PVB clair ou teinté) plus proche de la face F2 que la première couche teintée.

On peut aussi alternativement ou cumulativement ajouter dans ces vitrages un film fonctionnel non adhésif (film polymérique, PET par exemple, éventuellement avec un revêtement fonctionnel de préférence non métallique) sous la première couche teintée qui est par exemple une couche intercalaire (PVB).

On préfère la tranche du dispositif électroactif ou photovoltaïque ou film fonctionnel soit masquée par la couche de masquage en F2.

## Revendications

1. Vitrage feuilleté de véhicule (100 à 600) comprenant :
- une première feuille (1), transparente, en verre minéral, avec une première face principale extérieure dite face F1 (11) et une deuxième face principale intérieure dite face F2 (12),
- une deuxième feuille (2), transparente, en verre organique ou minéral, avec une troisième face principale dite face F3 (13) et une quatrième face principale dite face F4 (14), deuxième feuille d'indice de réfraction n0 dans le visible,
- entre la face F2 et la face F3, une ou plusieurs couches intermédiaires, diélectriques, transparentes, d'indices de réfraction donnés dans le visible, comportant une couche intercalaire de feuilletage polymère (3),
la première feuille étant teintée et/ou parmi la ou les couches intermédiaires une première couche étant teintée,
lorsque plusieurs couches intermédiaires sont teintées, la première couche teintée est la couche teintée la plus proche de la face F3,
n2 étant l'indice de réfraction le plus bas parmi les indices de réfraction des couches intermédiaires entre la face F3 et jusqu'à la première couche teintée incluse ou jusqu'à la face F2 en l'absence de couche intermédiaire teintée, avec n2<n0
- de préférence une source de lumière en couplage optique avec la deuxième feuille formant un guide de lumière,
- des moyens d'extraction de lumière guidée (6, 6') dans la deuxième feuille,
- un revêtement réfléchissant les infrarouges (15), transparent, lié à la face F4, comportant une couche fonctionnelle électroconductrice,
**caractérisé en ce qu'**il comporte entre la face F4 et la couche fonctionnelle électroconductrice, une couche isolatrice optique (151), transparente, diélectrique, et d'indice de réfraction n1 dans le visible avec n1 < n2 et d'épaisseur E1 d'au moins 100nm et submillimétrique.

2. Vitrage de véhicule selon la revendication précédente **caractérisé en ce que** la différence n2-n1 est supérieure à 0,02 et de préférence inférieure à 0,3.

3. Vitrage de véhicule selon l'une des revendications précédentes **caractérisé en ce que** n2-n1 est inférieure à 0,15.

4. Vitrage de véhicule selon l'une des revendications précédentes **caractérisé en ce que** n1 est supérieur ou égal à 1,3 ou à 1,4, n0 est d'au moins 1,5 et E1 est d'au moins 250nm.

5. Vitrage de véhicule selon l'une des revendications précédentes **caractérisé en ce que**, l'épaisseur E1 est dans une première région délimitée d'un graphique de l'épaisseur E1, en nm, en fonction de n1, avec une première limite inférieure incluse E1a définie par une première courbe C1 de l'épaisseur en fonction de n1 d'équation suivante : $E 1 a \left(n1\right) = b 1 - {a}_{11} * \left(n1-{n}_{r 1}\right) - {a}_{31} * {\left(n1-{n}_{r 1}\right)}^{3} - {a}_{51} * {\left(n1-{n}_{r 1}\right)}^{5}$ avec
nᵣ₁=1,499; b1=122nm; a₁₁=30,1nm; a₃₁=-9,44*10⁻³nm; a₅₁=5,69*10⁻⁶nm
et de préférence E1 est d'au plus 3µm.

6. Vitrage de véhicule selon l'une des revendications précédentes **caractérisé en ce que** la couche isolatrice optique est un revêtement dit isolateur, de préférence monocouche, sur la face F4 et de préférence en contact avec le revêtement réfléchissant les infrarouges.

7. Vitrage de véhicule selon la revendication 6 **caractérisé en ce que** le revêtement isolateur est minéral et sur la deuxième feuille de verre minéral, de préférence revêtement isolateur à base de silice, en particulier sol-gel, avec E1 au plus 1,5µm ou même 1,1µm.

8. Vitrage de véhicule selon l'une des revendications 6 ou 7 **caractérisé en ce que** le revêtement isolateur comporte une couche à base de silice poreuse, notamment sol-gel, éventuellement avec une sous-couche de silice dense notamment sol-gel d'indice de réfraction supérieur à n1.

9. Vitrage de véhicule selon l'une des revendications 6 à 8 **caractérisé en ce que** le revêtement isolateur comporte une couche à base de silice poreuse, notamment sol-gel, de porosité inférieure à 20% ou à 10% en volume.

10. Vitrage de véhicule selon l'une des revendications 1 à 6 **caractérisé en ce que** la couche isolatrice optique, notamment revêtement isolateur, comporte une couche organique ou hybride organique minéral, notamment une couche acrylate, polyméthacrylate, éventuellement en contact avec le revêtement réfléchissant les infrarouges ou le revêtement réfléchissant les infrarouges est sur un film porteur du revêtement réfléchissant les infrarouges sur une face principale externe Fe de préférence film porteur étant un verre d'épaisseur d'au plus 600µm.

11. Vitrage de véhicule selon l'une des revendications 1 à 5 **caractérisé en ce que** la couche isolatrice optique comporte une couche adhésive, en matière polymère réticulé, sur la face F4, en contact avec une face principale interne Fi d'un film transparent, film transparent porteur du revêtement réfléchissant les infrarouges sur une face principale externe Fe opposé à la face principale interne Fi, de préférence un verre d'épaisseur au plus 600µm.

12. Vitrage de véhicule selon la revendication précédente **caractérisé en ce que** la couche isolatrice optique comporte un film adhésif de préférence d'épaisseur d'au moins 30µm et mieux d'au plus 100µm, de préférence film sensible à la pression, de préférence choisi parmi les polymères à base d'acrylate, d'uréthane acrylate ou en fluoro uréthane acrylate ou de silicone.

13. Vitrage de véhicule selon l'une des revendications précédentes **caractérisé en ce que** la couche fonctionnelle électroconductrice est à base d'oxyde transparent conducteur en particulier choisie parmi : l'oxyde d'étain dopé au fluor, l'oxyde d'étain dopé à l'antimoine et/ou l'oxyde d'indium et d'étain, l'oxyde de zinc dopé ou non à l'aluminium, au gallium ou à l'antimoine.

14. Vitrage de véhicule selon l'une des revendications précédentes **caractérisé en ce que** le revêtement réfléchissant les infrarouges comporte une première sous couche diélectrique d'indice de réfraction supérieur à n2, de préférence d'indice de réfraction d'au moins 1,7, notamment nitrure de silicium, la couche isolatrice optique est notamment en contact avec la première sous couche diélectrique.

15. Vitrage de véhicule selon l'une des revendications précédentes **caractérisé en ce que** la première couche teintée est une couche intercalaire, notamment à base de PVB.

16. Vitrage de véhicule selon l'une des revendications précédentes **caractérisé en ce qu'**il comporte un dispositif électrocommandable ou photovoltaïque entre la face F2 et la face F3 et de préférence entre la face F2 et la première couche teintée et/ou **en ce qu'**il comporte un film polymère fonctionnel transparent entre la première couche teintée et la face F3 éventuellement entre la première couche teintée intercalaire et une couche intercalaire sur la face F3, notamment à base de PVB.

17. Vitrage de véhicule selon l'une des revendications précédentes **caractérisé en ce que** le vitrage est un toit, la deuxième feuille de verre est notamment en verre minéral extraclair.

18. Véhicule notamment routier incorporant au moins un vitrage selon l'une des revendications précédentes.

## Patentansprüche

1. Verbundverglasung für ein Fahrzeug (100, 600), umfassend:
- eine erste transparente Scheibe (1) aus Mineralglas mit einer ersten äußeren Hauptfläche, Fläche F1 (11), und einer zweiten inneren Hauptfläche, Fläche F2 (12),
- eine zweite transparente Scheibe (2) aus organischem Glas oder Mineralglas mit einer dritten Hauptfläche, Fläche F3 (13), und einer vierten Hauptfläche, Fläche F4 (14), wobei die zweite Scheibe einen Brechungsindex n0 in dem sichtbaren Bereich aufweist,
- zwischen der Fläche F2 und der Fläche F3 eine oder mehrere dielektrische, transparente Zwischenschichten mit gegebenen Brechungsindizes in dem sichtbaren Bereich, umfassend eine polymere Verbundzwischenschicht (3),
wobei die erste Scheibe getönt ist und/oder zwischen der/den Zwischenschicht(en) eine erste Schicht getönt ist,
wenn mehrere Zwischenschichten getönt sind, ist die erste getönte Schicht die der Fläche F3 am nächsten liegende getönte Schicht,
wobei n2 der niedrigste Brechungsindex unter den Brechungsindizes der Zwischenschichten zwischen der Fläche F3 und bis einschließlich zu der ersten getönten Schicht oder bis zu der Fläche F2 bei Fehlen einer getönten Zwischenschicht ist, mit n2 < n0
- vorzugsweise eine Lichtquelle in optischer Kopplung mit der zweiten lichtleitenden Scheibe,
- Auskopplungsmittel von gerichtetem Licht (6, 6') in der zweiten Scheibe,
- eine transparente, Infrarot-reflektierende Beschichtung (15), die mit der Fläche F4 verbunden ist und eine elektrisch leitende funktionelle Schicht umfasst,
**dadurch gekennzeichnet, dass** sie zwischen der Fläche F4 und der elektrisch leitenden, funktionellen Schicht eine transparente, dielektrische optische Isolierschicht (151) mit einem Brechungsindex n1 in dem sichtbaren Bereich mit n1 < n2 und eine Dicke E1 von mindestens 100 nm und im Submillimeterbereich aufweist.

2. Fahrzeugverglasung nach dem vorstehenden Anspruch,
**dadurch gekennzeichnet, dass** die Differenz n2 - n1 größer als 0,02 und vorzugsweise kleiner als 0,3 ist.

3. Fahrzeugverglasung nach einem der vorstehenden Ansprüche,
**dadurch gekennzeichnet, dass** n2 - n1 kleiner als 0,15 ist.

4. Fahrzeugverglasung nach einem der vorstehenden Ansprüche,
**dadurch gekennzeichnet, dass** n1 größer oder gleich 1,3 oder 1,4 ist, n0 mindestens 1,5 beträgt, und E1 mindestens 250 nm beträgt.

5. Fahrzeugverglasung nach einem der vorstehenden Ansprüche,
**dadurch gekennzeichnet, dass** die Dicke E1 in einem ersten begrenzten Bereich eines Graphen mit der Dicke E1, in nm, in Abhängigkeit von n1 liegt, mit einer ersten unteren Grenze einschließlich E1, die durch eine erste Kurve C1 der Dicke in Abhängigkeit von n1 mit der folgenden Gleichung definiert ist: $E 1 a \left(n1\right) = b 1 - {a}_{11} * \left(n1-{n}_{r 1}\right) - {a}_{31} * {\left(n1-{n}_{r 1}\right)}^{3} - {a}_{51} * {\left(n1-{n}_{r 1}\right)}^{5}$ mit
nᵣ₁ = 1,499; b1 = 122 nm; a₁₁ = 30,1 nm; a₃₁ = -9,44*10^{-3 nm}; a₅₁ = 5,69*10^{-6 nm}
und vorzugsweise beträgt E1 höchstens 3 µm.

6. Fahrzeugverglasung nach einem der vorstehenden Ansprüche, **dadurch gekennzeichnet, dass** die optische Isolierschicht eine sogenannte Isolierbeschichtung, vorzugsweise einschichtig, auf der Fläche F4 und vorzugsweise in Kontakt mit der Infrarot-reflektierenden Beschichtung ist.

7. Fahrzeugverglasung nach Anspruch 6, **dadurch gekennzeichnet, dass** die Isolierbeschichtung mineralisch und auf der zweiten mineralischen Glasscheibe ist, vorzugsweise eine Isolierbeschichtung auf Basis von Siliciumdioxid, insbesondere Sol-Gel, mit E1 von höchstens 1,5 µm oder sogar 1,1 µm.

8. Fahrzeugverglasung nach einem der Ansprüche 6 oder 7,
**dadurch gekennzeichnet, dass** die Isolierbeschichtung eine Schicht auf Basis von porösem Siliciumdioxid umfasst, insbesondere Sol-Gel, optional mit einer Unterschicht aus dichtem Siliciumdioxid, insbesondere Sol-Gel, mit einem Brechungsindex höher als n1.

9. Fahrzeugverglasung nach einem der Ansprüche 6 bis 8,
**dadurch gekennzeichnet, dass** die Isolierbeschichtung eine Schicht auf Basis von porösem Siliciumdioxid umfasst, insbesondere Sol-Gel mit einer Porosität von weniger als 20 Vol.-% oder 10 Vol.-%.

10. Fahrzeugverglasung nach einem der Ansprüche 1 bis 6,
**dadurch gekennzeichnet, dass** die optische Isolierschicht, insbesondere die Isolierbeschichtung, eine organische oder organisch-mineralische Hybridschicht umfasst, insbesondere eine Acrylat-, Polymethacrylatschicht, gegebenenfalls in Kontakt mit der Infrarot-reflektierenden Beschichtung, oder die Infrarot-reflektierende Beschichtung sich auf einer Trägerfolie der Infrarot-reflektierenden Beschichtung auf einer äußeren Hauptfläche Fe befindet, wobei die Trägerfolie vorzugsweise ein Glas mit einer Dicke von höchstens 600 µm ist.

11. Fahrzeugverglasung nach einem der Ansprüche 1 bis 5,
**dadurch gekennzeichnet, dass** die optische Isolierschicht eine Klebeschicht aus vernetztem Polymermaterial auf der Fläche F4, in Kontakt mit einer inneren Hauptfläche Fi einer transparenten Folie, transparente Trägerfolie der Infrarot-reflektierende Beschichtung auf einer äußeren Hauptfläche Fe, gegenüber der inneren Hauptfläche Fi, vorzugsweise ein Glas mit einer Dicke von höchstens 600 µm umfasst.

12. Fahrzeugverglasung nach dem vorstehenden Anspruch,
**dadurch gekennzeichnet, dass** die optische Isolierschicht eine Klebefolie umfasst, vorzugsweise mit einer Dicke von mindestens 30 µm und besser von höchstens 100 µm, vorzugsweise eine druckempfindliche Folie, vorzugsweise ausgewählt aus Polymeren auf Basis von Acrylat, Urethanacrylat oder Fluorurethanacrylat oder Silikon.

13. Fahrzeugverglasung nach einem der vorstehenden Ansprüche,
**dadurch gekennzeichnet, dass** die elektrisch leitende funktionelle Schicht auf einem transparenten leitfähigen Oxid basiert, insbesondere ausgewählt aus: fluordotiertem Zinnoxid, antimondotiertem Zinnoxid und/oder Indium-Zinn-Oxid, mit Aluminium, Gallium oder Antimon dotiertem oder undotiertem Zinkoxid.

14. Fahrzeugverglasung nach einem der vorstehenden Ansprüche,
**dadurch gekennzeichnet, dass** die Infrarot-reflektierende Beschichtung eine erste dielektrische Unterschicht mit einem Brechungsindex größer als n2, vorzugsweise mit einem Brechungsindex von mindestens 1,7, insbesondere Siliziumnitrid, aufweist, wobei die optische Isolierschicht insbesondere in Kontakt mit der ersten dielektrischen Unterschicht steht.

15. Fahrzeugverglasung nach einem der vorstehenden Ansprüche,
**dadurch gekennzeichnet, dass** die erste getönte Schicht eine Zwischenschicht ist, insbesondere auf Basis von PVB.

16. Fahrzeugverglasung nach einem der vorstehenden Ansprüche,
**dadurch gekennzeichnet, dass** sie eine elektrisch steuerbare oder photovoltaische Vorrichtung zwischen der Fläche F2 und der Fläche F3 und vorzugsweise zwischen der Fläche F2 und der ersten getönten Schicht umfasst **und/oder dadurch, dass** sie einen transparenten funktionellen Polymerfilm zwischen der ersten getönten Schicht und der Fläche F3 umfasst, optional zwischen der ersten getönten Zwischenschicht und einer Zwischenschicht auf der Fläche F3, insbesondere auf Basis von PVB.

17. Fahrzeugverglasung nach einem der vorstehenden Ansprüche,
**dadurch gekennzeichnet, dass** die Verglasung ein Dach ist, wobei die zweite Glasscheibe insbesondere aus besonders klarem Mineralglas besteht.

18. Fahrzeug, insbesondere Straßenfahrzeug, das mindestens eine Verglasung nach einem der vorstehenden Ansprüche einschließt.

## Claims

1. A laminated glazing (100, 600) for a vehicle, comprising:
- a first transparent sheet (1), made of mineral glass, with a first main outer face called face F1 (11) and a second main inner face called face F2 (12),
- a second transparent sheet (2), made of mineral or organic glass, with a third main face called face F3 (13) and a fourth main face called face F4 (14), which second sheet has a refractive index n0 in the visible range,
- between face F2 and face F3, one or more dielectric, transparent intermediate layers with given refractive indices in the visible range, comprising a polymer lamination interlayer (3),
the first sheet being tinted and/or a first layer of the intermediate layer(s) being tinted,
when several intermediate layers are tinted, the first tinted layer is the tinted layer closest to face F3,
n2 being the lowest refractive index among the refractive indices of the intermediate layers between face F3 and up to and including the first tinted layer, or up to face F2 in the absence of a tinted intermediate layer, with n2<n0
- preferably a light source in optical coupling with the second light guide sheet,
- means for extracting guided light (6, 6') in the second sheet,
- a transparent, infrared-reflecting coating (15) bonded to face F4, including an electrically conductive functional layer,
**characterized in that** it includes, between face F4 and the electrically conductive functional layer, a transparent, dielectric, optical insulating layer (151) with refractive index n1 in the visible range with n1 < n2 and thickness E1 of at least 100nm and submillimeter.

2. The vehicle glazing according to the preceding claim, **characterized in that** the difference n2-n1 is greater than 0.02 and preferably less than 0.3.

3. The glazing according to one of the preceding claims, **characterized in that** n2-n1 is less than 0.15.

4. The vehicle glazing according to one of the preceding claims, **characterized in that** n1 is greater than or equal to 1.3 or 1.4, n0 is at least 1.5 and E1 is at least 250nm.

5. The vehicle glazing according to one of the preceding claims, **characterized in that** the thickness E1 is in a first delimited region of a graph of thickness E1, in nm, based on n1, with a first included lower limit E1a defined by a first curve C1 of thickness based on n1 of the following equation: $E 1 a \left(n1\right) = b 1 - {a}_{11} * \left(n1-{n}_{r 1}\right) - {a}_{31} * {\left(n1-{n}_{r 1}\right)}^{3} - {a}_{51} * {\left(n1-{n}_{r 1}\right)}^{5}$ with
nᵣ₁=1.499; b1=122nm; a₁₁=30.1nm; a₃₁=-9.44*10⁻³nm; a₅₁=5.69*10⁻⁶nm
and preferably E1 is at most 3µm.

6. The vehicle glazing according to one of the preceding claims, **characterized in that** the optical insulating layer is a so-called insulating coating, preferably monolayer, on face F4 and preferably in contact with the infrared-reflecting coating.

7. The vehicle glazing according to claim 6, **characterized in that** the insulating coating is mineral and on the second mineral glass sheet, preferably a silica-based insulating coating, in particular sol-gel, with E1 at most 1.5µm or even 1.1µm.

8. The vehicle glazing according to one of claims 6 or 7, **characterized in that** the insulating coating comprises a layer based on porous silica, in particular sol-gel, optionally with an underlayer of dense silica, in particular sol-gel, with a refractive index greater than n1.

9. The vehicle glazing according to one of claims 6 to 8, **characterized in that** the insulating coating comprises a porous silica-based layer, in particular sol-gel, with a porosity of less than 20% or 10% by volume.

10. The vehicle glazing according to one of claims 1 to 6, **characterized in that** the optical insulating layer, in particular insulating coating, includes an organic or organic-mineral hybrid layer, in particular an acrylate or polymethacrylate layer, optionally in contact with the infrared-reflecting coating, or the infrared-reflecting coating is on a carrier film of the infrared-reflecting coating on a main outer face Fe, the carrier film preferably being a glass with a thickness of at most 600µm.

11. The vehicle glazing according to one of claims 1 to 5, **characterized in that** the optical insulating layer comprises an adhesive layer, made of crosslinked polymer material, on face F4, in contact with a main inner face Fi of a transparent film, a transparent film carrying the infrared-reflecting coating on a main outer face Fe opposite the main inner face Fi, preferably a glass with a thickness of at most 600µm.

12. The vehicle glazing according to the preceding claim, **characterized in that** the optical insulating layer comprises an adhesive film, preferably with a thickness of at least 30µm and better still of at most 100µm, preferably a pressure-sensitive film, preferably chosen from polymers based on acrylate, urethane acrylate or fluoro urethane acrylate or silicone.

13. The vehicle glazing according to one of the preceding claims, **characterized in that** the electrically conductive functional layer is based on a transparent conductive oxide chosen in particular from: fluorine-doped tin oxide, antimony-doped tin oxide and/or indium tin oxide, zinc oxide doped or not with aluminum, gallium or antimony.

14. The vehicle glazing according to one of the preceding claims, **characterized in that** the infrared-reflecting coating comprises a first dielectric underlayer with a refractive index greater than n2, preferably with a refractive index of at least 1.7, in particular silicon nitride, the optical insulating layer in particular being in contact with the first dielectric underlayer.

15. The vehicle glazing according to one of the preceding claims, **characterized in that** the first tinted layer is an interlayer, in particular based on PVB.

16. The vehicle glazing according to one of the preceding claims, **characterized in that** it comprises an electrically controllable or photovoltaic device between face F2 and face F3 and preferably between face F2 and the first tinted layer and/or **in that** it comprises a transparent functional polymer film between the first tinted layer and face F3, optionally between the first tinted interlayer and an interlayer on face F3, in particular based on PVB.

17. The vehicle glazing according to one of the preceding claims, **characterized in that** the glazing is a roof, the second glass sheet is in particular made of extra-clear mineral glass.

18. A vehicle, in particular road vehicle incorporating at least one glazing according to one of the preceding claims.
